# EUROPEAN PATENT SPECIFICATION

(11) **EP 2 148 423 B1**
(45) Date of publication and mention of the grant of the patent: **14.03.2012**
(21) Application number: 09251839.8
(22) Date of filing: 22.07.2009
(51) Int. Cl.: H02P 5/46, H02P 5/50

(54) **Asynchronous AC induction electrical machines in cross-interlockingly parallel connection**
Drehstrom-Asynchronmaschinen mit paralleler Verschaltung über Kreuz
Machines électriques à induction CA asynchrones en connexion parallèle en interblocage croisé

(30) Priority: 23.07.2008 US 219476; 15.12.2008 US 314629; 27.03.2009 US 382952
(43) Date of publication of application: 27.01.2010
(73) Proprietor: Yang, Tai-Her, Si-Hu Town, Dzan-Hwa (TW)
(72) Inventor: Yang, Tai-Her, Si-Hu Town, Dzan-Hwa (TW)
(74) Representative: Wright, Howard Hugh Burnby

(56) References cited:
- GB-A- 405 465
- GB-A- 556 437
- GB-A- 1 354 713

## Description

### BACKGROUND OF THE INVENTION

### (a) Field of the invention

The present invention innovatively discloses that at least two asynchronous squirrel cage electrical machines (hereinafter referred to as electrical machine) in parallel connection with the power source are respectively installed with main winding and control winding for electrical machine operation, wherein the two electrical machines being combined by taking the example of cross-interlockingly parallel connection comprises the following:
- The first electrical machine control winding and the first electrical machine main winding are windingly installed on the same polar axis or windingly installed at electrical angle between polar axes within the first electrical machine, wherein the two electrical machines are optionally operated in cross-interlockingly parallel connection according to operating requirements of the polarity relationship between the two to appear 1) additional exciting operation in the same polarities, or 2) differential exciting operation in reverse polarities;
- The second electrical machine control winding and the second electrical machine main winding are windingly installed on the same polar axis or windingly installed at electrical angle between polar axes within the second electrical machine wherein the two electrical machines are optionally operated in cross-interlockingly parallel connection according to operating requirements of the polarity relationship between the two to appear 1) additional exciting operation in the same polarities, or 2) differential exciting operation in reverse polarities;
- The first electrical machine main winding is the main operating winding of the first electrical machine, while the first terminal of the first electrical machine control winding is connected with the second terminal of the second electrical machine main winding installed in the second electrical machine;
- Tube second electrical machine main winding is the main operating winding of the second electrical machine, wherein the first terminal of the second electrical machine control winding is connected with the second terminal of the first electrical machine main winding installed in the first electrical machine;
- The first terminal of the first electrical machine main winding is connected with the first terminal of the second electrical machine main winding and further connected to the first terminal of the power source for input or output electric power;
- The second terminal of the first electrical machine control winding are connected with the second terminal of the second electrical machine control winding and further connected to the second terminal of the power source for input or output electric power;

The windings of said first electrical machine and second electrical machine are parallel connected and are driven by the power source, wherein the operation effect of the first electrical machine and the second electrical machine being cross-interlockingly parallel connected to drive the load individually is led by the changes of individual electrical machine driving loading statuses to appear variable impedance operation so as to change the end voltage ratio between individual electrical machines in cross-interlockingly parallel connections thereby allowing each individual electrical machine to produce interaction of required electromagnetic effect.

Especially for the application of disposing multiple asynchronous AC induction electrical machines to drive a common load when the common load varies unstable against the loads imposed by individual asynchronous AC induction electrical machines, such as the embodiment of using individual asynchronous AC induction electrical machines to drive different wheels, the load at the wheels on both sides will vary accordingly when the vehicle is making a turn, or the embodiment of the tram connecting multiple coaches to constitute a common load being disposed individual asynchronous AC induction electrical machines on individual coaches to drive the coaches individually, when the tram is speeding, decelerating or climbing up/down slopes, the common load varies according to the load imposed by individually disposed asynchronous AC induction electrical machines, the real time response and adjustment between individual asynchronous AC induction electrical machines is very important. Conventional solution is through the individual detecting device installed on individual asynchronous AC induction electrical machines to deliver the signal of load variations to the central controller, then the drive control device disposed on individual asynchronous AC induction electrical machines is subject to the control of the central controller, so that to control the corresponding operation performance of individual asynchronous AC induction electrical machines; the conventional solution has the drawback of complicated system, lower reliability, and longer response adjustment time period required between individual asynchronous AC induction electrical machines, therefore when applied to the tram connecting multiple coaches to constitute the common load as aforementioned, the individual coaches are prone to generate jostle phenomenon;

The present invention innovatively discloses that the asynchronous AC induction electrical machines in cross-interlockingly parallel connection is through the windings of multiple asynchronous AC induction electrical machines to crossly interlock and generate random adjustment of the operation performance according to the load variations, thereby having the advantages of simplifying the system, increasing the reliability as well as shortening the response adjustment time period of asynchronous AC induction electrical machines to load variations so that to promote the stability of the system.

### (b) Description of the Prior Art

When multiple units of conventional asynchronous AC induction electrical machines being parallel connected for motor or generator function are individually operated to drive the load, the individual electrical machines operate independently, thereby unable to produce interaction of particular electromagnetic effect. Document GB 1354713 discloses a winding arrangement for multiple-polyphase AC induction electrical machines with concentric windings. When the load on one of the machines varies, the phase voltages are varied according to the impedance variation rate of the machines.

### SUMMARY OF THE INVENTION

The present invention, as set forth in claim 1, innovatively discloses that at least two asynchronous squirrel cage electrical machines (hereinafter referred to as electrical machine) in parallel connection with the power source are respectively installed with main winding and control winding for electrical machine operation, take example for the two electrical machines in cross-interlockingly parallel connection, wherein the first electrical machine main winding is the main operating winding of the first electrical machine, while the first electrical machine control winding is series connected with the second electrical machine main winding of the second electrical machine, the first electrical machine control winding and the first electrical machine main winding are windingly installed on the same polar axis or windingly installed at electrical angle between polar axes within the first electrical machine, wherein the two electrical machines are optionally operated in cross-interlockingly parallel connection according to operating requirements of the polarity relationship between the two to appear **1**) additional exciting operation in the same polarities, or **2**) differential exciting operation in reverse polarities; the second electrical machine main winding being relatively installed within the second electrical machine is the main operating winding of the first electrical machine, while the second electrical machine control winding is series connected with the first electrical machine main winding of the first electrical machine, the second electrical machine control winding and the second electrical machine main winding are windingly installed on the same polar axis or windingly installed at electrical angle between polar axes within the second electrical machine wherein the two electrical machines are optionally operated in cross-interlockingly series connection according to operating requirements of the polarity relationship between the two to appear 1) additional exciting operation in the same polarities, or 2) differential exciting operation in reverse polarities, wherein the electrical machine in parallel connection with the power source being individually driven in loading operation causes the cross-interlockingly parallel connected electrical machine to appear variable impedance operation following variations of individual load-driven statuses of individual electrical machines thereby to let each individual electrical machine produce required interactive reactions by electrical machine effect.

Especially for the application of disposing multiple asynchronous AC induction electrical machines to drive a common load, when the common load varies unstable against the loads imposed by individual asynchronous AC induction electrical machines, such as the embodiment of using individual asynchronous AC induction electrical machines to drive different wheels, the load at the wheels on both sides will vary accordingly when the vehicle is making a turn, or the embodiment of the tram connecting multiple coaches to constitute a common load being disposed individual asynchronous AC induction electrical machines on individual coaches to drive the coaches individually, when the tram is speeding, decelerating or climbing up/down slopes, the common load varies according to the load imposed by individually disposed asynchronous AC induction electrical machines, the real time response and adjustment between individual asynchronous AC induction electrical machines is very important Conventional solution is through the individual detecting device installed on individual asynchronous AC induction electrical machines to deliver the signal of load variations to the central controller, then the drive control device disposed on individual asynchronous AC induction electrical machines is subject to the control of the central controller, so that to control the corresponding operation performance of individual asynchronous AC induction electrical machines; the conventional solution has the drawback of complicated system, lower reliability, and longer response adjustment time period required between individual asynchronous AC induction electrical machines, therefore when applied to the tram connecting multiple coaches to constitute the common load as aforementioned, the individual coaches are prone to generate jostle phenomenon;

The present invention innovatively discloses that the asynchronous AC induction electrical machines in cross-interlockingly parallel connection is through the windings of multiple asynchronous AC induction electrical machines to crossly interlock and generate random adjustment of the operation performance according to the load variations, thereby having the advantages of simplifying the system, increasing the reliability as well as shortening the response adjustment time period of asynchronous AC induction electrical machines to load variations so that to promote the stability of the system. In practical applications, the asynchronous AC induction electrical machines in cross-interlockingly parallel connection of present invention include the following:
-- The electrical specifications and characteristics of the main windings installed within respective individual asynchronous AC induction electrical machines can be the same or different;
-- The electrical specifications and characteristics of the control windings installed within respective individual asynchronous AC induction electrical machines can be the same or different;
-- The rated specifications and operating characteristics of respective individual asynchronous AC induction electrical machines can be the same or different;
-- The individual electrical machines can be constituted by asynchronous AC induction electrical machines having the same or different structural types and different operating characteristics;

For the asynchronous AC induction electrical machines in cross-interlockingly parallel connection of present invention, the individual electrical machines being mutually parallel connected are directly driven by AC electric power source, including AC single phase or multiple phase power sources, or DC to AC power source, wherein the power source can be fixed or modulated by voltage, frequency, or frequency and voltage together for rotational speed, rotating torque, rotational direction, or power regeneration braking operations, or used as the coupling transmission device under asynchronous electromagnetic effect for transmission operation.

### BRIEF DESCRIPTION OF THE DRAWINGS

Fig. 1 is a structural schematic view of asynchronous AC induction electrical machines in cross-interlockingly parallel connection of the present invention comprising two asynchronous AC induction electrical machines in series connection.
Fig. 2 is a schematic view of the embodiment of the present invention showing that two Y connected 3-phase asynchronous AC induction electrical machines are in cross-interlockingly parallel connection to be driven by the 3-phase AC power source.
Fig. 3 is a schematic view of the embodiment of the present invention showing that two 3-phase 4-wire Y connected 3-phase asynchronous AC induction electrical machines are in cross-interlockingly parallel connection to be driven by the 3-phase 4-wire power source.
Fig. 4 is a schematic view of the embodiment of the present invention showing that twoΔconnected 3-phase asynchronous AC induction electrical machines are in cross-interlockingly parallel connection to being driven by the 3-phase AC power source.
Fig. 5 is a structural schematic view of the asynchronous AC induction electrical machines in cross-interlockingly parallel connection of the present invention comprising three asynchronous AC induction electrical machines in parallel connection.

### DESCRIPTION OF MAIN COMPONENT SYMBOLS

100: First electrical machine
101: First electrical machine main winding
102: First electrical machine control winding
200: Second electrical machine
201: Second electrical machine main winding
202: Second electrical machine control winding
300: Third electrical machine
301: Third electrical machine main winding
302: Third electrical machine control winding
1000: Power source
3100: First 3-phase electrical machine
3101: First 3-phase electrical machine main winding
3102: First 3-phase electrical machine control winding
3200: Second 3-phase electrical machine
3201: Second 3-phase electrical machine main winding
3202: Second 3-phase electrical machine control winding

### DETAILED DESCRIPTION OF THE PREFERRED EMBODIMENTS

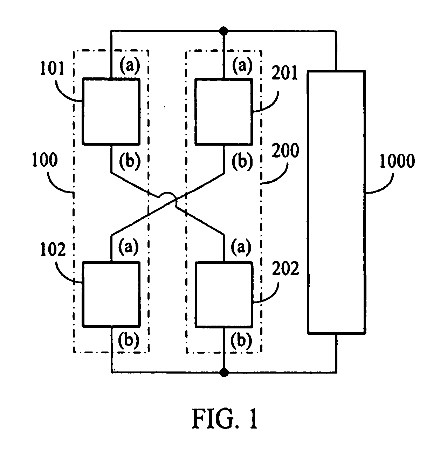

The principle of the present invention is delineated in the following: Fig. 1 is a structural schematic view of asynchronous AC induction electrical machines in cross-interlockingly parallel connection of the present invention comprising two asynchronous AC induction electrical machines in parallel connection.

As shown in Fig. 1, the cross-interlocked parallel connected circuit is driven by power source (1000) which includes AC single phase or multiple phase power sources, or DC to AC power source; , the power source can be fixed or modulated by voltage, frequency, or frequency and voltage together.

The present invention innovatively discloses that at least two asynchronous AC induction electrical machines (hereinafter referred to as electrical machine) in parallel connection with the power source are respectively installed with main winding and control winding for electrical machine operation, wherein the two electrical machines in cross-interlockingly parallel connection is taken as the example to constitute the following:

The first electrical machine main winding (101) is the main operating winding of the first electrical machine (100), while terminal (a) of the first electrical machine control winding (102) is series connected with terminal (b) of the second electrical machine main winding (201) of the second electrical machine (200), the first electrical machine control winding (102) and the first electrical machine main winding (101) are windingly installed on the same polar axis or windingly installed at electrical angle between polar axes within the first electrical machine (100), wherein the two electrical machines (100, 200) are optionally operated in cross-interlockingly parallel connection according to operating requirements of the polarity relationship between the two to appear 1) additional exciting operation in the same polarities, or 2) differential exciting operation in reverse polarities;

The second electrical machine main winding (201) being installed within the second electrical machine (200) is the main operating winding of the second electrical machine (200), while terminal (a) of the second electrical machine control winding (202) is series connected with terminal (b) of the first electrical machine main winding (101) of the first electrical machine (100), the second electrical machine control winding (202) and the second electrical machine main winding (101) are windingly installed on the same polar axis or windingly installed at electrical angle between polar axes within the second electrical machine (200) wherein the two electrical machines are optionally operated in cross-interlockingly parallel connection according to operating requirements of the polarity relationship between the two to appear 1) additional exciting operation in the same polarities, or 2) differential exciting operation in reverse polarities;

The terminal (a) of the first electrical machine main winding (101) of the first electrical machine (100) and the terminal (a) of the second electrical machine main winding (201) of the second electrical machine (200) are connected to one terminal of the power source (1000); the terminal (b) of the first electrical machine control winding (102) of the first electrical machine (100) is connected with terminal (b) of the second electrical machine control winding (202) of the second electrical machine (200) to further connect to the other terminal of the power source (1000), wherein the two electrical machines (100, 200) in cross-interlockingly parallel connection being parallel connected with the power source (1000) during the operation of individually driven loadings appear variable impedance operation following variations of individual load-driven statuses of individual electrical machines thereby to let each relatively mutually interlockingly parallel connected individual electrical machine produce the required interactive reactions by electrical machine effect.

In electricity discharge operation, if the current is changed due to loading variation of the first electrical machine (100), then exciting current of the second electrical machine control winding (202) of the second electrical machine (200) being series connected with the first electrical machine main winding (101) is simultaneously varied, so that the synthetic magnetic flux between the second electrical machine main winding (201) and the second electrical machine control winding (202) is varied according to polarity relationship, positional relationship of polar axis electrical angle, and phase relationship of exciting current between the two thereby allowing the torque and rotational speed of the second electrical machine (200) to be adjusted following the changes of its own end voltage and loading as well as the changes of operating current at the first electrical machine main winding (101) of the first electrical machine (100) being series connected with the second electrical machine control winding (202) simultaneously; on the contrary, if the current is changed due to loading variation of the second electrical machine (200), then exciting current of the first electrical machine control winding (102) of the first electrical machine (100) being series connected with the second electrical machine main winding (201) is simultaneously varied, so that the synthetic magnetic flux between the first electrical machine main winding (101) and the first electrical machine control winding (102) is varied according to polarity relationship, positional relationship of polar axis electrical angle, and phase relationship of exciting current between the two thereby allowing the torque and rotational speed of the first electrical machine (100) to be adjusted following changes of its own loading and changes of operating current at the second electrical machine main winding (201) of the second electrical machine (200) being series connected with the first electrical machine control winding (102) simultaneously.

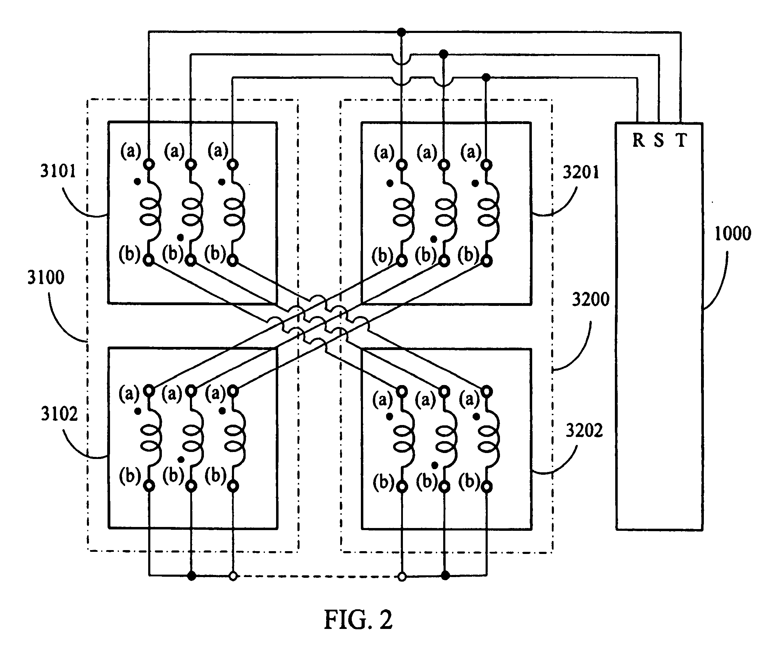

Fig. 2 is a schematic view of the embodiment of the present invention showing that two Y connected 3-phase asynchronous AC induction electrical machines are in cross-interlockingly parallel connection to be driven by the 3-phase AC power source;
Wherein:
--The first 3-phase electrical machine control winding (3102) and the first 3-phase electrical machine main winding (3101) are windingly installed on the same polar axis or windingly installed at electrical angle between polar axes within the first 3-phase electrical machine (3100), wherein the two electrical machines (3100, 3200) are optionally operated in cross-interlockingly parallel connection according to operating requirements of the polarity relationship between the two to appear 1) additional exciting operation in the same polarities, or 2) differential exciting operation in reverse polarities;
-- The second 3-phase electrical machine control winding (3202) and the second 3-phase electrical machine main winding (3201) are windingly installed on the same polar axis or windingly installed at electrical angle between polar axes within the second 3-phase electrical machine (3200), wherein the two electrical machines (3100, 3200) are optionally operated in cross-interlockingly parallel connection according to operating requirements of the polarity relationship between the two to appear 1) additional exciting operation in the same polarities, or 2) differential exciting operation in reverse polarities;
-- The first 3-phase electrical machine main winding (3101) is the main operating winding of the first 3-phase electrical machine (3100), wherein terminal (a) of each phase winding of the first 3-phase electrical machine control winding (3102) is connected with terminal (b) of each phase winding of the second 3-phase electrical machine main winding (3201) being installed within the second 3-phase electrical machine (3200);
-- The second 3-phase electrical machine main winding (3201) is the main operating winding of the second 3-phase electrical machine (3200), wherein terminal (a) of each phase winding of the second 3-phase electrical machine control winding (3202) is connected with terminal (b) of each phase winding of the first 3-phase electrical machine main winding (3101) being installed within the first 3-phase electrical machine (3100);
-- The terminal (a) of each phase winding of the first 3-phase electrical machine main winding (3101) and the terminal (a) of each phase winding of the second 3-phase electrical machine main winding (3201) are connected to terminals R.S.T of the 3-phase power source;
- The terminal (b) of each phase winding of the first 3-phase electrical machine control winding (3102) is commonly in Y connection, and the terminal (b) of each phase winding of the second 3-phase electrical machine control winding (3202) is commonly in Y connection, wherein the common Y connecting point of the two electrical machines (3100, 3200) can be separated, or the common Y connecting point of the two electrical machines (3100, 3200) can be connected;

Said first 3-phase electrical machine (3100) and said second 3-phase electrical machine (3200) are connected to the AC 3-phase power source (1000), wherein the first 3-phase electrical machine (3100) and the second 3-phase electrical machine (3200) in the operation of individually driven loadings are by the effect of cross-interlockingly parallel connected operation to appear variable impedance operation according to the changes of individual electrical machine driving loading statuses so as to change the end voltage ratio between individual electrical machines in cross-interlockingly parallel connections thereby allowing each individual electrical machine to produce interaction of required electromagnetic effect.

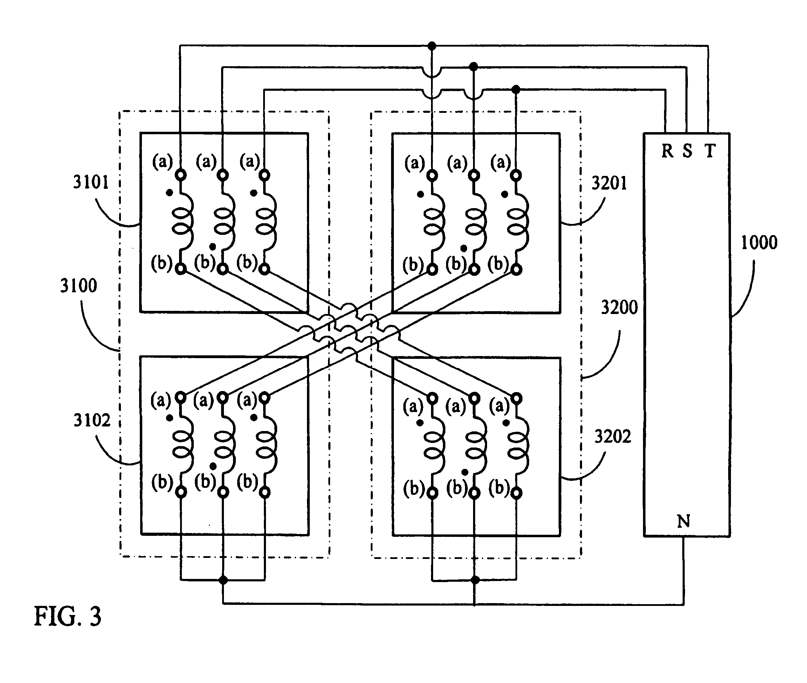

Fig. 3 is a schematic view of the embodiment of the present invention showing that two 3-phase 4-wire Y connected 3-phase asynchronous AC induction electrical machines are in cross-interlockingly parallel connection to be driven by the 3-phase 4-wire power source;
wherein:
-- The first 3-phase electrical machine control winding (3102) and the first 3-phase electrical machine main winding (3101) are windingly installed on the same polar axis or windingly installed at electrical angle between polar axes within the first 3-phase electrical machine (3100), wherein the two electrical machines (3100, 3200) are optionally operated in cross-interlockingly parallel connection according to operating requirements of the polarity relationship between the two to appear 1) additional exciting operation in the same polarities, or 2) differential exciting operation in reverse polarities;
-- The second 3-phase electrical machine control winding (3202) and the second 3-phase electrical machine main winding (3201) are windingly installed on the same polar axis or windingly installed at electrical angle between polar axes within the second 3-phase electrical machine (3200), wherein the two electrical machines (3100, 3200) are optionally operated in cross-interlockingly parallel connection according to operating requirements of the polarity relationship between the two to appear 1) additional exciting operation in the same polarities, or 2) differential exciting operation in reverse polarities;
-- The first 3-phase electrical machine main winding (3101) is the main operating winding of the first 3-phase electrical machine (3100), wherein terminal (a) of each phase winding of the first 3-phase electrical machine control winding (3102) is connected with terminal (b) of each phase winding of the second 3-phase electrical machine main winding (3201) being installed within the second 3-phase electrical machine (3200);
-- The second 3-phase electrical machine main winding (3201) is the main operating winding of the second 3-phase electrical machine (3200), wherein terminal (a) of each phase winding of the second 3-phase electrical machine control winding (3202) is connected with terminal (b) of each phase winding of the first 3-phase electrical machine main winding (3101) being installed within the first 3-phase electrical machine (3100);
-- The terminal (a) of each phase winding of the first 3-phase electrical machine main winding (3101) and the terminal (a) of each phase winding of the second 3-phase electrical machine main winding (3201) are commonly connected to terminals R.S.T. of the AC 3-phase 4-wire power source (1000);
-- The terminal (b) of each phase winding of the first 3-phase electrical machine control winding (3102) is commonly connected and the terminal (b) of each phase winding of the second 3-phase electrical machine control winding (3202) is commonly in Y connection, wherein the common Y connecting point of the two electrical machines is connected to the neutral terminal N of the AC 3-phase 4-wire power source;

Said first 3-phase electrical machine (3100) and said second 3-phase electrical machine (3200) are driven by the AC 3-phase 4-wire power source (1000), wherein the first 3-phase electrical machine (3100) and the second 3-phase electrical machine (3200) in the operation of individually driven loadings are by the effect of cross-interlockingly parallel connected operation to appear variable impedance operation according to the changes of individual electrical machine driving loading statuses so as to change the end voltage ratio between individual electrical machines in cross-interlockingly parallel connections thereby allowing each individual electrical machine to produce interaction of required electromagnetic effect.

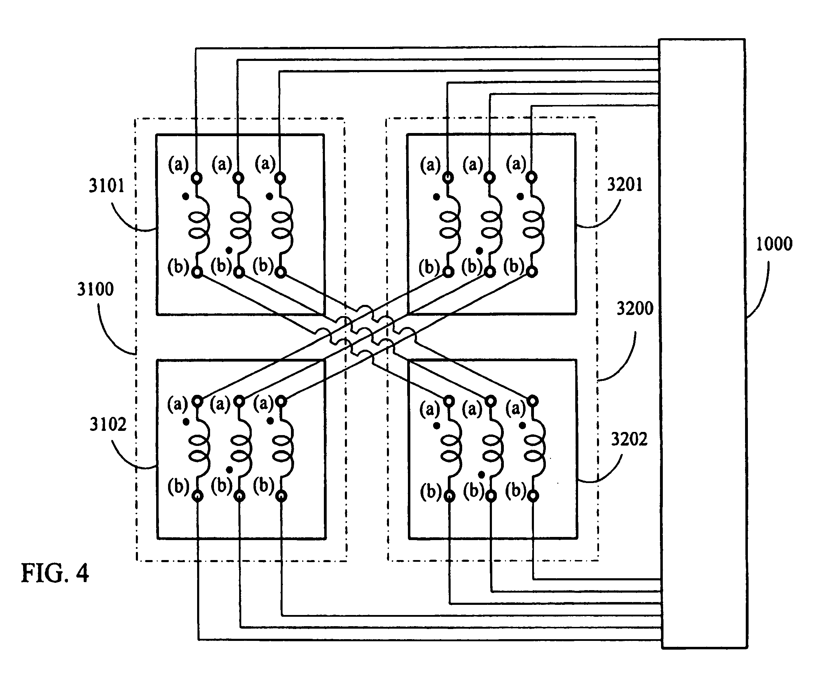

Fig. 4 is a schematic view of the embodiment of the present invention showing that twoΔconnected 3-phase asynchronous AC induction electrical machines are in cross-interlockingly parallel connection to being driven by the 3-phase AC power source;
wherein:
-- The first 3-phase electrical machine control winding (3102) and the first 3-phase electrical machine main winding (3101) are windingly installed on the same polar axis or windingly installed at electrical angle between polar axes within the first 3-phase electrical machine (3100), wherein the two electrical machines (3100, 3200) are optionally operated in cross-interlockingly parallel connection according to operating requirements of the polarity relationship between the two to appear 1) additional exciting operation in the same polarities, or 2) differential exciting operation in reverse polarities;
-- The second 3-phase electrical machine control winding (3202) and the second 3-phase electrical machine main winding (3201) are windingly installed on the same polar axis or windingly installed at electrical angle between polar axes within the second 3-phase electrical machine (3200), wherein the two electrical machines (3100, 3200) are optionally operated in cross-interlockingly parallel connection according to operating requirements of the polarity relationship between the two to appear 1) additional exciting operation in the same polarities, or 2) differential exciting operation in reverse polarities;
- The first 3-phase electrical machine main winding (3101) is the main operating winding of the first 3-phase electrical machine (3100), wherein the first terminal of the first 3-phase electrical machine control winding (3102) is connected with the second terminal of the second 3-phase electrical machine main winding (3201) being installed within the second 3-phase electrical machine (3200);
-- The second 3-phase electrical machine main winding (3201) is the main operating winding of the second 3-phase electrical machine (3200), wherein terminal (a) of each phase winding of the second 3-phase electrical machine control winding (3202) is connected with terminal (b) of each phase winding of the first 3-phase electrical machine main winding (3101) being installed within the first 3-phase electrical machine (3100);

The connecting methods of 3-phaseΔconnection can be following:
-- The terminal (a) of each phase winding of the first 3-phase electrical machine main winding (3101) and terminal (b) of each phase winding of the first 3-phase electrical machine control winding (3102) are in 3-phaseΔconnection and further connected to the AC 3-phase power source (1000);
-- The terminal (a) of each phase winding of the second 3-phase electrical machine main winding (3201) and terminal (b) of each phase winding of the first 3-phase electrical machine control winding (3102) are in 3-phase A connection and further connected to the AC 3-phase power source (1000);

The connecting methods of 3-phaseΔconnection can also be following:
-- The terminal (a) of each phase winding of the first 3-phase electrical machine main winding (3101) and terminal (b) of each phase winding of the first 3-phase electrical machine control winding (3102) are in 3-phaseΔconnection and further connected to the AC 3-phase power source (1000);
- The terminal (a) of each phase winding of the second 3-phase electrical machine main winding (3201) and terminal (b) of each phase winding of the second 3-phase electrical machine control winding (3202) are in 3-phase Δ connection and further connected to the AC 3-phase power source (1000);

Said first 3-phase electrical machine (3100) and said second 3-phase electrical machine (3200) are connected to the AC 3-phase power source (1000), wherein the first 3-phase electrical machine (3100) and the second 3-phase electrical machine (3200) in the operation of individually driven loadings are by the effect of cross-interlockingly parallel connected operation to appear variable impedance operation according to the changes of individual electrical machine driving loading statuses so as to change the end voltage ratio between individual electrical machines in cross-interlockingly parallel connections thereby allowing each individual electrical machine to produce interaction of required electromagnetic effect.

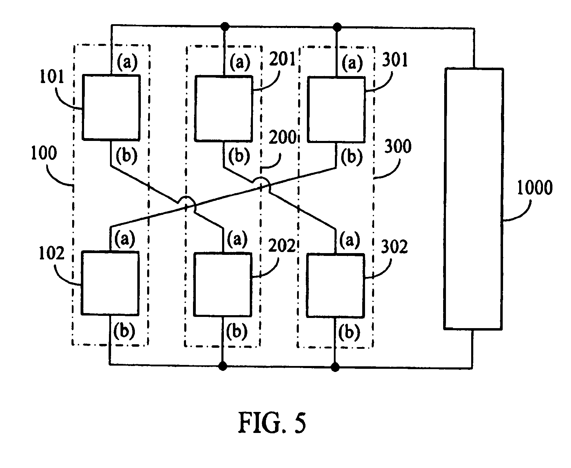

The aforesaid principles can also be applied to multiple electrical machines, such as that Fig. 5 is a structural schematic view of the asynchronous AC induction electrical machines in cross-interlokingly parallel connection of the present invention comprising three asynchronous AC induction electrical machines in parallel connection; as shown in Fig. 5:

The magnetic field of the first electrical machine (100) is windingly installed with the first electrical machine main winding (101) and windingly installed with the first electrical machine control winding (102) on the same polar axis or at electrical angle between polar axes, wherein terminal (a) of the first electrical machine control winding (102) is series connected with terminal (b) of the third electrical machine main winding (301) being windingly installed within the third electrical machine (300); the magnetic field of the second electrical machine (200) is windingly installed with the second electrical machine main winding (201) and windingly installed with the second electrical machine control winding (202) on the same polar axis or at electrical angle between polar axes, wherein terminal (a) of the second electrical machine control winding (202) is series connected with terminal (b) of the first electrical machine main winding (101) being windingly installed within the first electrical machine (100); the magnetic field of the third electrical machine (300) is windingly installed with the third electrical machine main winding (301) and windingly installed with the third electrical machine control winding (302) on the same polar axis or at electrical angle between polar axes, wherein terminal (a) of the third electrical machine control winding (302) is series connected with terminal (b) of the second electrical machine main winding (201) being windingly installed within the second electrical machine (200);

The terminal (a) of the first electrical machine main winding (101) of the first electrical machine (100) and terminal (a) of the second electrical machine main winding (201) of the second electrical machine (200) are connected with the terminal (a) of the third electrical machine main winding (301) of the third electrical machine (300) and further connected to one terminal of the power source (1000); the terminal (b) of the first electrical machine control winding (102) of the first electrical machine (100) and terminal (b) of the second electrical machine control winding (202) of the second electrical machine (200) are connected with the terminal (b) of the third electrical machine control winding (302) of the third electrical machine (300) and further connected to the other terminal of the power source (1000), it is through the combining status of the particular parallel connections between main windings and control windings of aforesaid three electrical machines being individually powered by the power source (1000) to drive loads and following variations of individual load-driven statuses of individual electrical machines to allow individual electrical machines to produce required interactive reactions by the electrical machine effect.

For the asynchronous AC induction electrical machines in cross-interlockingly parallel connection of present invention, if the number of constituting electrical machines is increased, the aforesaid principles and theories can be similarly deducted.

For the asynchronous AC induction electrical machines in cross-interlockingly parallel connection of present invention, the defined asynchronous AC electrical machine is constituted by rotating magnetic field and the asynchronously actuated interactive body induced by electromagnetic effect.

In practical application, the asynchronous AC induction electrical machines in cross-interlockingly parallel connection of present invention can be constituted by multiple units of one type or mixed types of squirrel cage type electrical machines or eddy current induction type asynchronous AC electrical machines to include the following combinations according to functional requirements: it is applied 1) for asynchronous AC induction squirrel cage type motor functional operations; or 2) for asynchronous eddy current induction motor functional operations; or 3) for asynchronous AC induction squirrel cage type generator functional operations; or 4) for asynchronous eddy current induction generator functional operations; or 5) for partial generator functional operation and partial motor functional operation; or 6) as the induction squirrel cage type electrical machine braking device; or 7) as the eddy current induction type electrical machine braking device; or 8) as the asynchronous induction squirrel type electromagnetic coupling transmission device; or 9) as the asynchronous eddy current induction type electromagnetic coupling transmission device.

For the asynchronous AC induction electrical machines in cross-interlockingly parallel connection of present invention, the excitation relationships between the main winding and the control winding in the electrical machine itself include the following:
(1) The main windings and control windings within all electrical machines themselves are installed in the same polarities; or
(2) The main windings and control windings within all electrical machines themselves are installed in reverse polarities; or
(3) The main windings and control windings within partial electrical machines themselves are installed in the same polarities, while the main windings and control windings within partial electrical machines themselves are installed in reverse polarities.

For the asynchronous AC induction electrical machines in cross-interlockingly parallel connection of present invention, the main winding and control winding within the individual electrical machine are installed on the same polarities or installed at electrical angle difference, wherein the method of installation at electrical angle difference is through control winding passing current to change distribution shape of the magnetic field constituted together with the main magnetic field

For the asynchronous AC induction electrical machines in cross-interlockingly parallel connection of present invention, the individual electrical machines are mutually series connected and are directly driven by AC electric power source, including AC single phase or multi-phase power source, or DC to AC power source; wherein the power source is fixedly or voltage modulated, or is commonly modulated by frequency or voltage, or modulated by frequency and voltage simultaneously for rotational speed, rotating torque, rotational direction, or power regeneration braking operations, or used as the coupling transmission device under asynchronous electromagnetic effect for transmission operation.

## Claims

1. The asynchronous squirrel cage electrical machines in cross-interlockingly parallel connection, which discloses that at least two asynchronous AC induction electrical machines, thereinafter referred to as electrical machine, in parallel connection with the power source (1000) are respectively installed with main winding and control winding for electrical machine operation, wherein the two electrical machines (100,200) being combined by taking the example of cross-interlockingly parallel connection comprises the following:
- The first electrical machine control winding and the first electrical machine main winding are windingly installed on the same polar axis or windingly installed at electrical angle between polar axes within the first electrical machine (100), wherein the two electrical machines are optionally operated in cross-interlockingly parallel connection according to operating requirements of the polarity relationship between the two to appear 1) additional exciting operation in the same polarities, or 2) differential exciting operation in reverse polarities;
-- The second electrical machine control winding (202) and the second electrical machine main winding (201) are windingly installed on the same polar axis or windingly installed at electrical angle between polar axes within the second electrical machine (200) wherein the two electrical machines are optionally operated in cross-interlockingly parallel connection according to operating requirements of the polarity relationship between the two to appear 1) additional exciting operation in the same polarities, or 2) differential exciting operation in reverse polarities;
- The first electrical machine main winding (101) is the main operating winding of the first electrical machine, while the first terminal of the first electrical machine control winding (102) is connected with the second terminal of the second electrical machine main winding installed in the second electrical machine (200);
- The second electrical machine main winding (201) is the main operating winding of the second electrical machine (200), wherein the first terminal of the second electrical machine control winding (202) is connected with the second terminal of the first electrical machine main winding (101) installed in the first electrical machine (100);
- The first terminal of the first electrical machine main winding (101) is connected with the first terminal of the second electrical machine main winding (201) and further connected to the first terminal of the power source for input or output electric power (1000),
-- The second terminal of the first electrical machine control winding (102) are connected with the second terminal of the second electrical machine control winding (202) and further connected to the second terminal of the power source (1000) for input or output electric power,
The windings of said first electrical machine (100) and second electrical machine (200) are parallel connected and are driven by the power source, wherein the operation effect of the first electrical machine and the second electrical machine being cross-interlockingly parallel connected to drive the load individually is led by the changes of individual electrical machine driving loading statuses to appear variable impedance operation so as to change the end voltage ratio between individual electrical machines in cross-interlockingly parallel connections thereby allowing each individual electrical machine to produce interaction of required electromagnetic effect.

2. The asynchronous AC induction electrical machines in cross-interlockingly parallel connection as claimed in claim 1, wherein the electrical specifications and characteristics of the main windings installed within respective individual asynchronous AC induction electrical machines can be the same or different.

3. The asynchronous AC induction electrical machines in cross-interlockingly parallel connection as claimed in claim 1, wherein the electrical specifications and characteristics of the control windings installed within respective individual asynchronous AC induction electrical machines can be the same or different.

4. The asynchronous AC induction electrical machines in cross-interlockingly parallel connection as claimed in claim 1, wherein the rated specifications and operating characteristics of respective individual asynchronous AC induction electrical machines can be the same or different.

5. The asynchronous AC induction electrical machines in cross-interlockingly parallel connection as claimed in claim 1, wherein the individual electrical machines can be constituted by asynchronous AC induction electrical machines having the same or different structural types and different operating characteristics.

6. The asynchronous AC induction electrical machines in cross-interlockingly parallel connection as claimed in claim 1, wherein it is driven by AC electric power source, including AC single phase or multiple phase power sources, or DC to AC power source, wherein the power source can be fixed or modulated by voltage, frequency, or frequency and voltage together for rotational speed, rotating torque, rotational direction, or power regeneration braking operations, or used as the coupling transmission device under asynchronous electromagnetic effect for transmission operation.

7. The asynchronous AC induction electrical machines in cross-interlockingly parallel connection as claimed in claim 1, wherein it includes adopting two electrical machines in cross-interlockingly parallel connection to constitute the following:
The first electrical machine main winding (101) is the main operating winding of the first electrical machine (100), while terminal (a) of the first electrical machine control winding (102) is series connected with terminal (b) of the second electrical machine main winding (201) of the second electrical machine (200), the first electrical machine control winding (102) and the first electrical machine main winding (101) are windingly installed on the same polar axis or windingly installed at electrical angle between polar axes within the first electrical machine (100), wherein the two electrical machines (100, 200) are optionally operated in cross-interlockingly parallel connection according to operating requirements of the polarity relationship between the two to appear 1) additional exciting operation in the same polarities, or 2) differential exciting operation in reverse polarities;
The second electrical machine main winding (201) being installed within the second electrical machine (200) is the main operating winding of the second electrical machine (200), while terminal (a) of the second electrical machine control winding (202) is series connected with terminal (b) of the first electrical machine main winding (101) of the first electrical machine (100), the second electrical machine control winding (202) and the second electrical machine main winding (201) are windingly installed on the same polar axis or windingly installed at electrical angle between polar axes within the second electrical machine (200) wherein the two electrical machines are optionally operated in cross-interlockingly parallel connection according to operating requirements of the polarity relationship between the two to appear 1) additional exciting operation in the same polarities, or 2) differential exciting operation in reverse polarities;
The terminal (a) of the first electrical machine main winding (101) of the first electrical machine (100) and the terminal (a) of second electrical machine main winding (201) of the second electrical machine (200) are connected to one terminal of the power source (1000); the terminal (b) of the first electrical machine control winding (102) of the first electrical machine (100) is connected with terminals (b) of the second electrical machine control winding (202) of the second electrical machine to further connect to the other terminal of the power source (1000), wherein the two electrical machines (100, 200) in cross-interlockingly parallel connection being parallel connected with the power source (1000) during the operation of individually driven loadings appear variable impedance operation following variations of individual load-driven statuses of individual electrical machines thereby to let each relatively mutually interlockingly parallel connected individual electrical machine produce the required interactive reactions by electrical machine effect;
In electricity discharge operation, if the current is changed due to loading variation of the first electrical machine (100), then exciting current of the second electrical machine control winding (202) of the second electrical machine (200) being series connected with the first electrical machine main winding (101) is simultaneously varied, so that the synthetic magnetic flux between the second electrical machine main winding (201) and the second electrical machine control winding (202) is varied according to polarity relationship, positional relationship of polar axis electrical angle, and phase relationship of exciting current between the two thereby allowing the torque and rotational speed of the second electrical machine (200) to be adjusted following the changes of its own end voltage and loading as well as the changes of operating current at the first electrical machine main winding (101) of the first electrical machine (100) being series connected with the second electrical machine control winding (202) simultaneously; on the contrary, if the current is changed due to loading variation of the second electrical machine (200), then exciting current of the first electrical machine control winding (102) of the first electrical machine (100) being series connected with the second electrical machine main winding (201) is simultaneously varied, so that the synthetic magnetic flux between the first electrical machine main winding (101) and the first electrical machine control winding (102) is varied according to polarity relationship, positional relationship of polar axis electrical angle, and phase relationship of exciting current between the two thereby allowing the torque and rotational speed of the first electrical machine (100) to be adjusted following changes of its own loading and changes of operating current at the second electrical machine main winding (201) of the second electrical machine (200) being series connected with the first electrical machine control winding (102) simultaneously.

8. The asynchronous AC induction electrical machines in cross-interlockingly parallel connection as claimed in claim 1, wherein it includes adopting two Y connected 3-phase asynchronous AC induction electrical machines to be driven by 3-phase AC power source, wherein:
-- The first 3-phase electrical machine control winding (3102) and the first 3-phase electrical machine main winding (3101) are windingly installed on the same polar axis or windingly installed at electrical angle between polar axes within the first 3-phase electrical machine (3100), wherein the two electrical machines (3100, 3200) are optionally operated in cross-interlockingly parallel connection according to operating requirements of the polarity relationship between the two to appear 1) additional exciting operation in the same polarities, or 2) differential exciting operation in reverse polarities;
- The second 3-phase electrical machine control winding (3202) and the second 3-phase electrical machine main winding (3201) are windingly installed on the same polar axis or windingly installed at electrical angle between polar axes within the second 3-phase electrical machine (3200), wherein the two electrical machines (3100, 3200) are optionally operated in cross-interlockingly parallel connection according to operating requirements of the polarity relationship between the two to appear 1) additional exciting operation in the same polarities, or 2) differential exciting operation in reverse polarities;
-- The first 3-phase electrical machine main winding (3101) is the main operating winding of the first 3-phase electrical machine (3100), wherein terminal (a) of each phase winding of the first 3-phase electrical machine control winding (3102) is connected with terminal (b) of each phase winding of the second 3-phase electrical machine main winding (3201) being installed within the second 3-phase electrical machine (3200);
- The second 3-phase electrical machine main winding (3201) is the main operating winding of the second 3-phase electrical machine (3200), wherein terminals (a) of each phase winding of the second 3-phase electrical machine control winding (3202) is connected with terminal (b) of each phase winding of the first 3-phase electrical machine main winding (3101) being installed within the first 3-phase electrical machine (3100);
- The terminal (a) of each phase winding of the first 3-phase electrical machine main winding (3101) and the terminal (a) of each phase winding of the second 3-phase electrical machine main winding (3201) are connected to terminals R.S.T. of the 3-phase power source;
- The terminal (b) of each phase winding of the first 3-phase electrical machine control winding (3102) is commonly in Y connection, and the terminal (b) of each phase winding of the second 3-phase electrical machine control winding (3202) is commonly in Y connection, wherein the common Y connecting point of the two electrical machines (3100, 3200) can be separated, or the common Y connecting point of the two electrical machines (3100, 3200) can be connected;
Said first 3-phase electrical machine (3100) and said second 3-phase electrical machine (3200) are connected to the AC 3-phase power source (1000), wherein the first 3-phase electrical machine (3100) and the second 3-phase electrical machine (3200) in the operation of individually driven loadings are by the effect of cross-interlockingly parallel connected operation to appear variable impedance operation according to the changes of individual electrical machine driving loading statuses so as to change the end voltage ratio between individual electrical machines in cross-interlockingly parallel connections thereby allowing each individual electrical machine to produce interaction of required electromagnetic effect.

9. The asynchronous AC induction electrical machines in cross-interlockingly parallel connection as claimed in claim 1, wherein it includes adopting two 3-phase 4-wire Y connected 3-phase asynchronous AC induction electrical machines to be driven by the 3-phase 4-wire power source, wherein:
-- The first 3-phase electrical machine control winding (3102) and the first 3-phase electrical machine main winding (3101) are windingly installed on the same polar axis or windingly installed at electrical angle between polar axes within the first 3-phase electrical machine (3100), wherein the two electrical machines (3100, 3200) are optionally operated in cross-interlockingly parallel connection according to operating requirements of the polarity relationship between the two to appear 1) additional exciting operation in the same polarities, or 2) differential exciting operation in reverse polarities;
- The second 3-phase electrical machine control winding (3202) and the second 3-phase electrical machine main winding (3201) are windingly installed on the same polar axis or windingly installed at electrical angle between polar axes within the second 3-phase electrical machine (3200), wherein the two electrical machines (3100, 3200) are optionally operated in cross-interlockingly parallel connection according to operating requirements of the polarity relationship between the two to appear 1) additional exciting operation in the same polarities, or 2) differential exciting operation in reverse polarities;
-- The first 3-phase electrical machine main winding (3101) is the main operating winding of the first 3-phase electrical machine (3100), wherein terminal (a) of each phase winding of the first 3-phase electrical machine control winding (3102) is connected with terminal (b) of each phase winding of the second 3-phase electrical machine main winding (3201) being installed within the second 3-phase electrical machine (3200);
-- The second 3-phase electrical machine main winding (3201) is the main operating winding of the second 3-phase electrical machine (3200), wherein terminal (a) of each phase winding of the second 3-phase electrical machine control winding (3202) is connected with terminal (b) of each phase winding of the first 3-phase electrical machine main winding (3101) being installed within the first 3-phase electrical machine (3100);
-- The terminal (a) of each phase winding of the first 3-phase electrical machine main winding (3101) and the terminal (a) of each phase winding of the second 3-phase electrical machine main winding (3201) are commonly connected to terminals R.S.T. of the AC 3-phase 4-wire power source (1000);
- The terminal (b) of each phase winding of the first 3-phase electrical machine control winding (3102) is commonly connected and the terminal (b) of each phase winding of the second 3-phase electrical machine control winding (3202) is commonly in Y connection, wherein the common Y connecting point of the two electrical machines is connected to the neutral terminal N of the AC 3-phase 4-wire power source;
Said first 3-phase electrical machine (3100) and said second 3-phase electrical machine (3200) are driven by the AC 3-phase 4-wire power source (1000), wherein the first 3-phase electrical machine (3100) and the second 3-phase electrical machine (3200) in the operation of individually driven loadings are by the effect of cross-interloclcingly parallel connected operation to appear variable impedance operation according to the changes of individual electrical machine driving loading statuses so as to change the end voltage ratio between individual electrical machines in cross-interlockingly parallel connections thereby allowing each individual electrical machine to produce interaction of required electromagnetic effect

10. The asynchronous AC induction electrical machines in cross-interlocldngly parallel connection as claimed in claim 1, wherein it includes adopting twoΔconnected 3-phase asynchronous AC induction electrical machines to be driven by the 3-phase AC power source, wherein:
-- The first 3-phase electrical machine control winding (3102) and the first 3-phase electrical machine main winding (3101) are windingly installed on the same polar axis or windingly installed at electrical angle between polar axes within the first 3-phase electrical machine (3100), wherein the two electrical machines (3100, 3200) are optionally operated in cross-interlockingly parallel connection according to operating requirements of the polarity relationship between the two to appear 1) additional exciting operation in the same polarities, or 2) differential exciting operation in reverse polarities;
-- The second 3-phase electrical machine control winding (3202) and the second 3-phase electrical machine main winding (3201) are windingly installed on the same polar axis or windingly installed at electrical angle between polar axes within the second 3-phase electrical machine (3200), wherein the two electrical machines (3100, 3200) are optionally operated in cross-interlockingly parallel connection according to operating requirements of the polarity relationship between the two to appear 1) additional exciting operation in the same polarities, or 2) differential exciting operation in reverse polarities;
- The first 3-phase electrical machine main winding (3101) is the main operating winding of the first 3-phase electrical machine (3100), wherein the first terminal of the first 3-phase electrical machine control winding (3102) is connected with the second terminal of the second 3-phase electrical machine main winding (3201) being installed within the second 3-phase electrical machine (3200);
- The second 3-phase electrical machine main winding (3201) is the main operating winding of the second 3-phase electrical machine (3200), wherein terminal (a) of each phase winding of the second 3-phase electrical machine control winding (3202) is connected with terminal (b) of each phase winding of the first 3-phase electrical machine main winding (3101) being installed within the first 3-phase electrical machine (3100);
The connecting methods of 3-phaseΔconnection can be following:
-- The terminal (a) of each phase winding of the first 3-phase electrical machine main winding (3101) and terminal (b) of each phase winding of the first 3-phase electrical machine control winding (3102) are in 3-phaseΔconnection and further connected to the AC 3-phase power source (1000);
- The terminal (a) of each phase winding of the second 3-phase electrical machine main winding (3201) and terminal (b) of each phase winding of the first 3-phase electrical machine control winding (3102) are in 3-phase A connection and further connected to the AC 3-phase power source (1000);
The connecting methods of 3-phaseΔconnection can also be following:
-The terminal (a) of each phase winding of the first 3-phase electrical machine main winding (3101) and terminal (b) of each phase winding of the first 3-phase electrical machine control winding (3102) are in 3-phaseΔconnection and further connected to the AC 3-phase power source (1000);
-- The terminal (a) of each phase winding of the second 3-phase electrical machine main winding (3201) and terminal (b) of each phase winding of the second 3-phase electrical machine control winding (3202) are in 3-phase Δ connection and further connected to the AC 3-phase power source (1000);
Said first 3-phase electrical machine (3100) and said second 3-phase electrical machine (3200) are connected to the AC 3-phase power source (1000), wherein the first 3-phase electrical machine (3100) and the second 3-phase electrical machine (3200) in the operation of individually driven loadings are by the effect of cross-interlockingly parallel connected operation to appear variable impedance operation according to the changes of individual electrical machine driving loading statuses so as to change the end voltage ratio between individual electrical machines in cross-interlockingly parallel connections thereby allowing each individual electrical machine to produce interaction of required electromagnetic effect.

11. The asynchronous AC induction electrical machines in cross-interlockingly parallel connection as claimed in claim 1, wherein it includes adopting three asynchronous AC induction electrical machines in parallel connection, wherein:
The magnetic field of the first electrical machine (100) is windingly installed with the first electrical machine main winding (101) and windingly installed with the first electrical machine control winding (102) on the same polar axis or at electrical angle between polar axes, wherein terminal (a) of the first electrical machine control winding (102) is series connected with terminal (b) of the third electrical machine main winding (301) being windingly installed within the third electrical machine (300); the magnetic field of the second electrical machine (200) is windingly installed with the second electrical machine main winding (201) and windingly installed with the second electrical machine control winding (202) on the same polar axis or at electrical angle between polar axes, wherein terminal (a) of the second electrical machine control winding (202) is series connected with terminal (b) of the first electrical machine main winding (101) being windingly installed within the first electrical machine (100); the magnetic field of the third electrical machine (300) is windingly installed with the third electrical machine main winding (301) and windingly installed with the third electrical machine control winding (302) on the same polar axis or at electrical angle between polar axes, wherein terminal (a) of the third electrical machine control winding (302) is series connected with terminal (b) of the second electrical machine main winding (201) being windingly installed within the second electrical machine (200);
The terminal (a) of the first electrical machine main winding (101) of the first electrical machine (100) and terminal (a) of the second electrical machine main winding (201) of the second electrical machine (200) are connected with the terminal (a) of the third electrical machine main winding (301) of the third electrical machine (300) and further connected to one terminal of the power source (1000); the terminal (b) of the first electrical machine control winding (102) of the first electrical machine (100) and terminal (b) of the second electrical machine control winding (202) of the second electrical machine (200) are connected with the terminal (b) of the third electrical machine control winding (302) of the third electrical machine (300) and further connected to the other terminal of the power source (1000), it is through the combining status of the particular parallel connections between main windings and control windings of aforesaid three electrical machines being individually powered by the power source (1000) to drive loads and following variations of individual load-driven statuses of individual electrical machines to allow individual electrical machines to produce required interactive reactions by the electrical machine effect;
For the asynchronous AC induction electrical machines in cross-interlockingly parallel connection of present invention, if the number of constituting electrical machines is increased the aforesaid principles and theories can be similarly deducted.

12. The asynchronous AC induction electrical machines in cross-interlockingly parallel connection as claimed in claim 1, wherein the defined asynchronous AC electrical machine is constituted by rotating magnetic field and the asynchronously actuated interactive body induced by electromagnetic effect.

13. The asynchronous AC induction electrical machines in cross-interlockingly parallel connection as claimed in claim 1, wherein it includes to be applied 1) for asynchronous AC induction squirrel cage type motor functional operations; or 2) for asynchronous eddy current induction motor functional operations; or 3) for asynchronous AC induction squirrel cage type generator functional operations; or 4) for asynchronous eddy current induction generator functional operations; or 5) for partial generator functional operation and partial motor functional operation; or 6) as the induction squirrel cage type electrical machine braking device; or 7) as the eddy current induction type electrical machine braking device; or 8) as the asynchronous induction squirrel type electromagnetic coupling transmission device; or 9) as the asynchronous eddy current induction type electromagnetic coupling transmission device.

14. The asynchronous AC induction electrical machines in cross-interlockingly parallel connection as claimed in claim 1, wherein the excitation relationships between the main winding and the control winding in the electrical machine itself include the following:
1) The main windings and control windings within all electrical machines themselves are installed in the same polarities; or
2) The main windings and control windings within all electrical machines themselves are installed in reverse polarities; or
3) The main windings and control windings within partial electrical machines themselves are installed in the same polarities, while the main windings and control windings within partial electrical machines themselves are installed in reverse polarities.

15. The asynchronous AC induction electrical machines in cross-interlockingly parallel connection as claimed in claim 1, wherein the main winding and control winding within the individual electrical machine are installed on the same polarities or installed at electrical angle difference, wherein the method of installation at electrical angle difference is through control winding passing current to change distribution shape of the magnetic field constituted together with the main magnetic field.

16. The asynchronous AC induction electrical machines in cross-interlockingly parallel connection as claimed in claim 1, wherein the individual electrical machines are mutually series connected and are directly driven by AC electric power source, including AC single phase or multi-phase power source, or DC to AC power source; wherein the power source is fixedly or voltage modulated, or is commonly modulated by frequency or voltage, or modulated by frequency and voltage simultaneously for rotational speed rotating torque, rotational direction, or power regeneration braking operations, or used as the coupling transmission device under asynchronous electromagnetic effect for transmission operation.

## Patentansprüche

1. Asynchrone elektrische Käfigläufermaschinen in kreuzverriegelter Parallelverschaltung, bei denen mindestens zwei Asynchron-WS-Induktionsmaschinen - im Folgenden als elektrische Maschinen bezeichnet - in Parallelverbindung mit der Stromquelle (1000) mit Haupt- und Steuerwicklungen für den Betrieb als Elektromaschinen installiert und die beiden elektrischen Maschinen (100, 200) bspw. in kreuzverriegelter Parallelschaltung wie folgt verschaltet sind:
- Die Steuer- und die Hauptwicklung der ersten elektrischen Maschine (100) sind in dieser auf der gleichen Polachse oder mit einem elektrischen Winkel zwischen Polachsen gewickelt, wobei die beiden elektrischen Maschinen optional in der kreuzverriegelten Parallelverschaltung entsprechend den betrieblichen Anforderungen der Polaritätsbeziehung zwischen den beiden betrieben werden, um 1) mit Zusatzerregung in den gleichen Polaritäten oder 2) mit Differenzerregung in entgegengesetzten Polaritäten zu arbeiten;
- Die Steuer- und die Hauptwicklung (202 bzw. 201) der zweiten elektrischen Maschine (200) sind in dieser auf der gleichen Polachse oder mit einem elektrischen Winkel zwischen Polachsen gewickelt, wobei die beiden elektrischen Maschinen optional in der kreuzverriegelten Parallelverschaltung entsprechend den Betriebsanforderungen der Polaritätsbeziehung zwischen den beiden betrieben werden, um 1) mit Zusatzerregung in den gleichen Polaritäten oder 2) mit Differenzerregung in entgegengesetzten Polaritäten zu arbeiten;
- die Hauptwicklung (101) der ersten elektrischen Maschine ist die Hauptarbeitswicklung der ersten elektrischen Maschine, während der erste Anschluss der Steuerwicklung (102) der ersten elektrischen Maschine mit dem zweiten Anschluss der Hauptwicklung der zweiten elektrischen Maschine (200) verbunden ist;
- die Hauptwicklung (201) der zweiten elektrischen Maschine ist die Hauptarbeitswicklung der zweiten elektrischen Maschine (200), wobei der erste Anschluss der Steuerwicklung (202) der zweiten elektrischen Maschine mit dem zweiten Anschluss der Hauptwicklung (101) der ersten elektrischen Maschine(00) verbunden ist;
- der erste Anschluss der Hauptwicklung (101) der ersten elektrischen Maschine ist mit dem ersten Anschluss der Hauptwicklung (201) der zweiten elektrischen Maschine sowie weiterhin mit dem ersten Anschluss der Stromquelle (1000) zur Strom-Aufnahme oder -Abgabe verbunden;
- der zweite Anschluss der Steuerwicklung (102) der ersten elektrischen Maschine ist mit dem zweiten Anschluss der Steuerwicklung (202) der zweiten elektrischen Maschine und weiterhin mit dem zweiten Anschluss der Stromquelle (1000) zur Strom-Aufnahme oder -Abgabe verbunden;
- Die Wicklungen der ersten und der zweiten elektrischen Maschine (100, 200) sind parallel geschaltet und werden von der Stromquelle gespeist, wobei die betriebliche Wirkung der ersten und der zweien elektrischen Maschine, die kreuzverriegelt parallel geschaltet sind, um die Last individuell anzutreiben, geführt wird von den Änderungen des Belastungszustands der einzelnen elektrischen Maschine, um als Betrieb mit variabler Impedanz zu erscheinen und das End-Spannungsverhältnis zwischen den kreuzverriegelt parallel geschalteten elektrischen Maschinen zu verändern, so dass die elektrischen Maschinen jeweils eine Wechselwirkung des geforderten elektromagnetischen Effekts erzeugen können.

2. Kreuzverriegelt parallel geschaltete Asynchron-WS-Induktionsmaschinen nach Anspruch 1, bei denen die Daten und Eigenschaften der Hauptwicklungen der elektrischen Maschinen gleich oder unterschiedlich sein können.

3. Kreuzverriegelt parallel geschaltete Asynchron-WS-Induktionsmaschinen nach Anspruch 1, bei denen die Daten und Eigenschaften der Steuerwicklungen der elektrischen Maschinen gleich oder unterschiedlich sein können.

4. Kreuzverriegelt parallel geschaltete Asynchron-WS-Induktionsmaschinen nach Anspruch 1, bei denen die Spezifikationen und betrieblichen Eigenschaften der einzelnen Maschinen gleich oder unterschiedlich sein können.

5. Kreuzverriegelt parallel geschaltete Asynchron-WS-Induktionsmaschinen nach Anspruch 1, deren Aufbauarten gleich oder unterschiedlich und deren betriebliche Eigenschaften unterschiedlich sind.

6. Kreuzverriegelt parallel geschaltete Asynchron-WS-Induktionsmaschinen nach Anspruch 1, die aus einer elektrischen WS-Quelle - einschl. einer ein- oder mehrphasigen Quelle - oder einer GS-auf-WS-Stromquelle gespeist werden, wobei die Stromquelle nach Spannung, Frequenz oder Spannung und Frequenz gemeinsam fest oder moduliert sein kann für die Drehzahl, das Drehmoment, die Drehrichtung, eine generatorische Bremsung oder eine Benutzung als koppelndes Getriebe unter Nutzung des elektromagnetischen Asynchroneffekts zum Getriebebetrieb.

7. Kreuzverriegelt parallel geschaltete Asynchron-WS-Induktionsmaschinen nach Anspruch 1, wobei zwei elektrische Maschinen kreuzverriegelt parallel geschaltet sind wie folgt:
- Die Hauptwicklung (101) der ersten elektrischen Maschine ist die Hauptarbeitswicklung der ersten elektrischen Maschine (100), während der Anschluss (a) der Steuerwicklung (102) der ersten elektrischen Maschine mit dem Anschluss (b) der Hauptwicklung (201) der zweiten elektrischen Maschine (200) in Reihe geschaltet ist, wobei die Steuer- und die Hauptwicklung (102, 101) in der ersten elektrischen Maschine (100) auf die gleiche Polachse oder mit einem elektrischen Winkel zwischen den Polachsen gewickelt sind und die beiden elektrischen Maschinen (100, 200) optional in kreuzverriegelter Parallelschaltung entsprechend den betrieblichen Anforderungen der Polaritätsbeziehung zwischen beiden betrieben werden, um 1) mit Zusatzerregung mit gleicher Polarität oder 2) Differenzerregung mit entgegengesetzter Polarität zu erscheinen;
- Die Hauptwicklung (201) der zweiten elektrischen Maschine ist die Hauptarbeitswicklung der zweiten elektrischen Maschine (200), während der Anschluss (a) der Steuerwicklung (202) der zweiten elektrischen Maschine mit dem Anschluss (b) der Hauptwicklung (101) der ersten elektrischen Maschine (200) in Reihe geschaltet ist, wobei die Steuer- und die Hauptwicklung (202, 201) in der zweiten elektrischen Maschine (200) auf die gleiche Polachse oder mit einem elektrischen Winkel zwischen den Polachsen gewickelt sind und die beiden elektrischen Maschinen (100, 200) optional kreuzverriegelt parallel verschaltet entsprechend den betrieblichen Anforderungen der Polaritätsbeziehung zwischen beiden betrieben werden, um 1) mit Zusatzerregung mit gleicher Polarität oder 2) Differenzerregung mit entgegengesetzter Polarität zu erscheinen;
- Der Anschluss (a) der Hauptwicklung (101) der ersten elektrischen Maschine (100) und der Anschluss (a) der Hauptwicklung (201) der zweiten elektrischen Maschine (200) sind an einen Anschluss der Stromquelle (1000) und der Anschluss (b) der Steuerwicklung (102) der ersten elektrischen Maschine (100) an den Anschluss (b) der Steuerwicklung (202) der zweiten elektrischen Maschine (200) und weiterhin an den anderen Anschluss de Stromquelle (1000) gelegt, wobei die beiden kreuzverriegelt parallel geschalteten und parallel an die Stromquelle (1000) gelegten elektrischen Maschinen (100, 200) im Betrieb individuell angetriebener Belastungen als variable Impedanz entsprechend Schwankungen des jeweiligen Belastungszustands erscheinen, damit jede der kreuzverriegelt parallelgeschalteten elektrischen Maschinen in Folge der elektrischen Maschinenwirkung die geforderte interaktive Reaktion erzeugen kann;
- Ändert sich im Stromabgabebetrieb der Strom in Folge einer Laständerung der ersten elektrischen Maschine (100), ändert sich gleichzeitig der Erregerstrom der Steuerwicklung (202) der zweiten elektrischen Maschine (200), die in Reihe mit der Hauptwicklung (101) der ersten elektrischen Maschine liegt, so dass der synthetische Magnetfluss zwischen der Hauptwicklung (201) und der Steuerwicklung (202) der zweiten elektrischen Maschine entsprechend der Polaritätsbeziehung, der Lagebeziehung des elektrischen Winkels der Polachsen und der Phasenbeziehung des Erregerstroms zwischen beiden sich ändert und so das Drehmoment und die Drehzahl der zweiten elektrischen Maschine (200) Änderungen der eigenen End-Spannung und Belastung sowie Änderungen des Arbeitsstroms der ersten Hauptwicklung (101) der ersten Maschine (100) folgt, die mit der Steuerwicklung (202) der zweiten elektrischen Maschine in Reihe geschaltet ist; ändert sich dagegen der Strom in Folge von Belastungsänderungen der zweiten elektrischen Maschine (200), ändert sich gleichzeitig der Erregerstrom der Steuerwicklung (102) der ersten elektrischen Maschine(100), die in Reihe geschaltet ist mit der Hauptwicklung (201) der zweiten elektrischen Maschine (200), so dass der synthetische Magnetfluss zwischen der Hauptwicklung (101) und der Steuerwicklung (102) der ersten elektrischen Maschine (100) entsprechend der Polaritätsbeziehung, der Lagebeziehung des elektrischen Winkels der Polachsen und der Phasenbeziehung des Erregerstroms zwischen beiden sich ändert, so dass das Drehmoment und die Drehzahl der ersten elektrischen Maschine (100) Änderungen der eigenen Belastung und des Arbeitsstroms der Hauptwicklung (201) der zweiten elektrischen Maschine (200) folgen und diesen entsprechend nachgestellt werden können.

8. Kreuzverriegelt parallel geschaltete Asynchron-WS-Induktionsmaschinen nach Anspruch 1, wobei zwei sternverschaltete Drehstrom-Asynchron-WS-Induktionsmaschinen aus einer Drehstrom-WS-Quelle gespeist werden, wie folgt:
- Die Steuerwicklung (3102) und die Hauptwicklung (3101) der ersten Drehstrommaschine sind in der ersten Drehstrommaschine (3100) auf die gleiche Polachse oder mit einem elektrischen Winkel zwischen Polachsen gewickelt, wobei die beiden elektrischen Maschinen (3100, 3200) optional kreuzverriegelt parallel geschaltet nach den betrieblichen Anforderungen der Polaritätsbeziehung zwischen beiden betrieben werden, um 1) mit Zusatzerregung mit gleicher Polarität oder 2) Differenzerregung mit entgegengesetzten Polaritäten zu erscheinen;
- Die Steuerwicklung (3202) und die Hauptwicklung (3201) der ersten Drehstrommaschine sind in der ersten Drehstrommaschine (3200) auf die gleiche Polachse oder mit einem elektrischen Winkel zwischen Polachsen gewickelt, wobei die beiden elektrischen Maschinen (3100, 3200) optional kreuzverriegelt parallel geschaltet nach den betrieblichen Anforderungen der Polaritätsbeziehung zwischen beiden betrieben werden, um 1) mit Zusatzerregung mit gleicher Polarität oder 2) Differenzerregung mit entgegengesetzten Polaritäten zu erscheinen;
- Die Hauptwicklung (3101) der ersten Drehstrommaschine (3100) ist deren Hauptarbeitswicklung, wobei der Anschluss (a) jeder Phase der Steuerwicklung (3102) der ersten Drehstrommaschine mit dem Anschluss (b) jeder Phase der Hauptwicklung (3201) der zweiten Drehstrommaschine (3200) verbunden ist;
- Die Hauptwicklung (3201) der zweiten Drehstrommaschine (3200) ist deren Hauptarbeitswicklung, wobei der Anschluss (a) jeder Phase der Steuerwicklung (3202) der ersten Drehstrommaschine mit dem Anschluss (b) jeder Phase der Hauptwicklung (3101) der ersten Drehstrommaschine (3100) verbunden ist;
- Der Anschluss (a) jeder Phase der Hauptwicklung (3101) der ersten Drehstrommaschine und der Anschluss (a) jeder Phase der Hauptwicklung (3201) der zweiten Drehstrommaschine sind an die Anschlüsse RST der Drehstromquelle gelegt;
- Der Anschluss (b) jeder Phase der Steuerwicklung (3102) der ersten Drehstrommaschine und der Anschluss (b) jeder Phase der Steuerwicklung (3202) der zweiten Drehstrommaschine sind sternverschaltet, wobei die Sternpunkte der beiden elektrischen Maschinen (3100, 3200) getrennt oder verbunden sein können;
- Die erste und die zweite Drehstrommaschine (3100, 3200) sind mit der Drehstrom-WS-Quelle (100) verbunden, wobei die erste und die zweite Drehstrommaschine (3100, 3200) bei individuell angetriebenen Lasten in Folge der kreuzverriegelten Parallelschaltung als variable Impedanz entsprechend den Änderungen der Lastzustände der angetriebenen Lasten erscheinen, um das End-Spannungsverhältnis zwischen den kreuzverriegelt parallel geschalteten elektrischen Maschinen zu ändern, so dass jede einzelne elektrische Maschine die Wechselwirkung des geforderten elektromagnetischen Effekts erzeugen kann.

9. Kreuzverriegelt parallel geschaltete Asynchron-WS-Induktionsmaschinen nach Anspruch 1, bei denen aus einer 4-Draht-Drehstromquelle zwei sternverschaltete 4-Draht-Drehstrommaschinen gespeist werden, wobei:
- die Steuerwicklung (3102) und die Hauptwicklung (3101) der ersten Drehstrommaschine auf der gleichen Polachse oder mit einem elektrischen Winkel zwischen Polachsen der ersten Drehstrommaschine (3100) gewickelt sind, wobei die elektrischen Maschinen (3100, 3200) optional kreuzverriegelt parallel geschaltet betrieben werden entsprechend den betrieblichen Anforderungen der Polaritätsbeziehung, um 1) mit Zusatzerregung mit gleicher Polarität oder 2) mit Differenzerregung mit entgegengesetzter Polarität zu erscheinen;
- die Steuerwicklung (3202) und die Hauptwicklung (3201) der zweiten Drehstrommaschine auf der gleichen Polachse oder mit einem elektrischen Winkel zwischen Polachsen der ersten Drehstrommaschine (3200) gewickelt sind, wobei die elektrischen Maschinen (3100, 3200) optional kreuzverriegelt parallel geschaltet betrieben werden entsprechend den betrieblichen Anforderungen der Polaritätsbeziehung, um 1) mit Zusatzerregung mit gleicher Polarität oder 2) mit Differenzerregung mit entgegengesetzter Polarität zu erscheinen;
- Die Hauptwicklung (3101) der ersten Drehstrommaschine (3100) ist deren Hauptarbeitswicklung, wobei der Anschluss (a) jeder Phase der Steuerwicklung (3102) der ersten Drehstrommaschine mit dem Anschluss (b) jeder Phase der Hauptwicklung (3201) der zweiten Drehstrommaschine verbunden ist, die in dieser installiert ist;
- Die Hauptwicklung (3201) der zweiten Drehstrommaschine (3200) ist deren Hauptarbeitswicklung, wobei der Anschluss (a) jeder Phase der Steuerwicklung (3202) der ersten Drehstrommaschine mit dem Anschluss (b) jeder Phase der Hauptwicklung (3101) der ersten Drehstrommaschine verbunden ist, die in dieser installiert ist;
- Der Anschluss (a) jeder Phase der Hauptwicklung (3101) der ersten Drehstrommaschine und der Anschluss (a) jeder Phase der Hauptwicklung (3201) der zweiten Drehstrommaschine sind gemeinsam an die Anschlüsse RST der 4-Draht-Drehstromqulle (1000) gelegt;
- Der Anschluss (b) jeder Phase der Steuerwicklung (3102) der ersten Drehstrommaschine und der Anschluss (b) jeder Phase der Steuerwicklung (3202) der zweiten Drehstrommaschine sind sternverschaltet, wobei die Sternpunkte beider elektrischer Maschinen mit dem Neutralanschluss N der 4-Draht-Drehstromquelle verbunden sind;
- Die erste und die zweite Drehstrommaschine (3100, 3200) werden von der 4-Draht-Drehstromquelle (1000) gespeist, wobei die erste und die zweite Drehstrommaschine (3100, 3200) bei einzeln angetriebenen Lasten in Folge des kreuzverriegelten Parallelbetriebs als variable Impedanzen entsprechend den Änderungen der Lastzustände der einzeln angetriebenen Maschinen erscheinen, um das End-Spannungsverhältnis zwischen den einzelnen kreuzverriegelt parallel geschalteten Maschinen zu ändern und so jeder elektrischen Maschine zu erlauben, eine Wechselwirkung des geforderten elektromagnetischen Effekts zu erzeugen.

10. Kreuzverriegelt parallel geschaltete Asynchron-WS-Induktionsmaschinen nach Anspruch 1, bei denen aus einer WS-Drehstromquelle zwei dreieckverschaltete Drehstrommaschinen gespeist werden, wobei:
- die Steuerwicklung (3102) und die Hauptwicklung (3101) der ersten Drehstrommaschine auf der gleichen Polachse oder mit einem elektrischen Winkel zwischen Polachsen der ersten Drehstrommaschine (3100) gewickelt sind, wobei die elektrischen Maschinen (3100, 3200) optional kreuzverriegelt parallel betrieben werden entsprechend den betrieblichen Anforderungen der Polaritätsbeziehung, um 1) mit Zusatzerregung mit gleicher Polarität oder 2) mit Differenzerregung mit entgegengesetzter Polarität zu erscheinen;
- die Steuerwicklung (3202) und die Hauptwicklung (3201) der zweiten Drehstrommaschine auf der gleichen Polachse oder mit einem elektrischen Winkel zwischen Polachsen der ersten Drehstrommaschine (3200) gewickelt sind, wobei die elektrischen Maschinen (3100, 3200) optional kreuzverriegelt parallel betrieben werden entsprechend den betrieblichen Anforderungen der Polaritätsbeziehung, um 1) mit Zusatzerregung mit gleicher Polarität oder 2) mit Differenzerregung mit entgegengesetzter Polarität zu erscheinen;
- die Hauptwicklung (3101) der ersten Drehstrommaschine (3100) ist deren Hauptarbeitswicklung, wobei der erste Anschluss der Steuerwicklung (3102) der ersten Drehstrommaschine mit dem zweiten Anschluss der Hauptwicklung (3201) der zweiten Drehstrommaschine verbunden ist, die in dieser installiert ist;
- die Hauptwicklung (3201) der zweiten Drehstrommaschine (3200) ist deren Hauptarbeitswicklung, wobei der Anschluss (a) jeder Phase der Steuerwicklung (3202) der zweiten Drehstrommaschine mit dem Anschluss (b) jeder Phase der Hauptwicklung (3101) der ersten Drehstrommaschine verbunden ist, die in dieser installiert ist;
Die Drehstrom-Dreieckverbindungen können wie folgt verschaltet sein:
- Der Anschluss (a) jeder Phase der Hauptwicklung (3101) und der Anschluss (b) jeder Phase der Steuerwicklung (3102) der ersten elektrischen Maschine sind dreieckverschaltet und weiterhin an die Drehstromquelle (1000) gelegt;
Die Verschaltungsarten der Drehstrom-Dreieckverbindung können auch wie folgt sein:
- Der Anschluss (a) jeder Phase der Hauptwicklung (3101) und der Anschluss (b) jeder Phase der Steuerwicklung (3102) der ersten Drehstrommaschine sind dreieckverschaltet und weiterhin an die Drehstromquelle (1000) gelegt;
- Der Anschluss (a) jeder Phase der Hauptwicklung (3201) und der Anschluss (b) jeder Phase der Steuerwicklung (3202) der ersten Drehstrommaschine sind dreieckverschaltet und weiterhin an die Drehstromquelle (1000) gelegt;
- Die erste und die zweite Drehstrommaschine (3100, 3200) sind an die Drehstromquelle gelegt, wobei die erste und die zweite Drehstrommaschine (3100, 3200) bei individuell angetriebenen Lasten in Folge des kreuzverriegelten Parallelbetriebs entsprechend den Zustandsänderungen die einzelnen Lasten antreibenden Maschinen als variable Impedanz erscheinen, um das End-Spannungsverhältnis zwischen den einzelnen kreuzverriegelt parallel geschalteten Maschinen zu ändern und so jeder elektrischen Maschine zu erlauben, die Wechselwirkung des erforderlichen elektromagnetischen Effekts zu erzeugen.

11. Kreuzverriegelt parallel geschaltete Asynchron-WS-Induktionsmaschinen nach Anspruch 1, bei denen drei Asynchron-Drehstrommaschinen parallel geschaltet sind, wie folgt:
Das Magnetfeld der ersten elektrischen Maschine (100) ist mit der Hauptwicklung (101) und der Steuerwicklung (102) auf der gleichen Polachse oder mit einem elektrischen Winkel zwischen Polachsen gewickelt, wobei der Anschluss (a) der Steuerwicklung (102) der ersten elektrischen Maschine mit dem Anschluss (b) der Hauptwicklung (30) der dritten elektrischen Maschine (300) verbunden ist; das Magnetfeld der zweiten elektrischen Maschine (200) ist mit der Hauptwicklung (201) und der Steuerwicklung (202) auf der gleichen Polachse oder mit einem elektrischen Winkel zwischen Polachsen gewickelt, wobei der Anschluss (a) der Steuerwicklung (202) der zweiten elektrischen Maschine mit dem Anschluss (b) der Hauptwicklung (101) der ersten elektrischen Maschine (100) verbunden ist; das Magnetfeld der dritten elektrischen Maschine (300) ist mit der Hauptwicklung (301) und der Steuerwicklung (302) auf der gleichen Polachse oder mit einem elektrischen Winkel zwischen Polachsen gewickelt, wobei der Anschluss (a) der Steuerwicklung (302) der dritten elektrischen Maschine mit dem Anschluss (b) der Hauptwicklung (201) der zweiten elektrischen Maschine (200) verbunden ist;
Der Anschluss (a) der Hauptwicklung (101) der ersten elektrischen Maschine und der Anschluss (a) der Hauptwicklung (201) der zweiten elektrischen Maschine (200) sind mit dem Anschluss (a) der Hauptwicklung (301) der dritten elektrischen Maschine (300) und weiterhin mit einem Anschluss der Stromquelle (1000) verbunden; der Anschluss (b) der Steuerwicklung (102) der ersten elektrischen Maschine und der Anschluss (b) der Steuerwicklung (202) der zweiten elektrischen Maschine (200) sind mit dem Anschluss (b) der Steuerwicklung (302) der dritten elektrischen Maschine (300) und weiterhin mit dem anderen Anschluss der Stromquelle (1000) verbunden; durch den Kombinationszustand der Parallelverbindungen zwischen den Haupt- und den Steuerwicklungen der genannten drei elektrischen Maschinen, die zum Lastantrieb einzeln von der Stromquelle (1000) gespeist werden, lassen sich Änderungen der Zustände der Lastantriebe der einzelnen Maschinen verfolgen, so dass letzere in Folge des Elektromaschineneffekts die erforderlichen interaktiven Reaktionen erzeugen können;
Für eine größere Anzahl der erfindungsgemäßen, kreuzverriegelt parallel verbundenen Asynchron-WS-Induktionsmaschinen lassen die vorgenannten Prinzipien sich analog ableiten.

12. Kreuzverriegelt parallel verbundene Asynchron-WS-Induktionsmaschinen nach Anspruch 1, bei denen die definierte Asynchron-WS-Induktionsmaschine aus einem umlaufenden Magnetfeld und dem durch den elektromagnetischen Effekt asynchron betätigten Hauptteil besteht.

13. Kreuzverriegelt parallel verbundene Asynchron-WS-Induktionsmaschinen nach Anspruch 1 in der Anwendung auf den Betrieb von 1) Asynchron-Käfigläufermotoren oder 2) Asynchron-Wirbelstrom-Induktionsmotoren oder 3) Asynchron-Käfigläufergeneratoren oder 4) Asynchron-Wirbelstrom-Generatoren oder 5) auf einen Teil-Generator- und Teil-Motorbetrieb oder als 6) Induktions-Käfigläuferbremsanordnung oder 7) als Induktions-Wirbelstrombremsanordnung oder 8) als elektromagnetisch gekoppeltes Asynchron-Käfigläufergetriebe oder als 9) elektromagnetisch gekoppeltes Asynchron-Wirbelstromgetriebe.

14. Kreuzverriegelt parallel verbundene Asynchron-WS-Induktionsmaschinen nach Anspruch 1, bei denen die Erregerbeziehung zwischen der Haupt- und der Steuerwicklung der elektrischen Maschine selbst Folgendes beinhaltet:
1) Die Haupt- und die Steuerwicklungen in allen elektrischen Maschinen selbst sind mit gleicher Polarität installiert;
2) Die Haupt- und die Steuerwicklungen in allen elektrischen Maschinen selbst sind mit entgegengesetzter Polarität installiert;
3) Die Haupt- und Steuerwicklungen in einigen der elektrischen Maschinen selbst sind mit gleicher und in einigen der elektrischen Maschinen mit entgegengesetzter Polarität installiert.

15. Kreuzverriegelt parallel verbundene Asynchron-WS-Induktionsmaschinen nach Anspruch 1, bei denen die Haupt- und die Steuerwicklung in der einzelnen Maschine mit der gleichen Polarität oder mit unterschiedlichem elektrischem Winkel installiert sind, wobei die Installierung unter einem elektrischem Winkel über den durch Steuerwicklung fließenden Strom erfolgt, um die Verteilung des zusammen mit dem magnetischen Hauptfeld bestehenden Magnetfelds zu ändern.

16. Kreuzverriegelt parallel verbundene Asynchron-WS-Induktionsmaschinen nach Anspruch 1, bei denen die einzelnen Maschinen in Reihe geschaltet sind und aus einer WS-Drehstromquelle direkt gespeist werden, bei der es sich um eine Ein- oder Mehrphasen-WS-Quelle handeln kann und diese fest oder moduliert sein kann nach Spannung, Frequenz oder Spannung und Frequenz gemeinsam für die Drehzahl, das Drehmoment, die Drehrichtung, eine generatorische Bremsung oder eine Benutzung als koppelndes Getriebe unter Nutzung des elektromagnetischen Asynchroneffekts zum Getriebebetrieb.

## Revendications

1. Machines électriques asynchrones à induction à cage d'écureuil et à courant alternatif montées en parallèle avec interblocage croisé, dans lesquelles au moins deux machines électriques asynchrones à induction et à courant alternatif, ci-après désignées sous le nom de machines électriques, montées en parallèle avec la source d'énergie (1000) étant respectivement équipées d'un enroulement principal et d'un enroulement de commande du fonctionnement des machines électriques, dans lesquelles les deux machines électriques (100, 200) combinées en prenant l'exemple du montage en parallèle avec interblocage croisé comportent ce qui suit :
• l'enroulement de commande (102) de la première machine électrique et l'enroulement principal (101) de la première machine électrique sont enroulés autour du même axe polaire ou enroulés selon un angle électrique entre les axes polaires dans la première machine électrique (100), groupe dans lequel les deux machines électriques fonctionnent optionnellement en montage parallèle avec interblocage croisé selon les nécessités de fonctionnement du rapport de polarité qui apparaît entre le fonctionnement à excitation supplémentaire de polarités identiques, ou le fonctionnement à excitation différentiel de polarités opposées ;
• l'enroulement de commande (202) de la seconde machine électrique et l'enroulement principal (201) de la seconde machine électrique sont enroulés autour du même axe polaire ou enroulés selon un angle électrique entre les axes polaires dans la seconde machine électrique (200), groupe dans lequel les deux machines électriques fonctionnent optionnellement en montage parallèle avec interblocage croisé selon les nécessités de fonctionnement du rapport de polarité qui apparaît entre le fonctionnement à excitation supplémentaire de polarités identiques, ou le fonctionnement à excitation différentiel de polarités opposées ;
• l'enroulement principal (101) de la première machine électrique est l'enroulement de fonctionnement principal de la première machine électrique (100), alors que la première borne de l'enroulement de commande (102) de la première machine électrique est connectée à la seconde borne de l'enroulement de commande (202) de la seconde machine électrique dans la seconde machine électrique (200) ;
• l'enroulement principal (201) de la seconde machine électrique est l'enroulement de fonctionnement principal de la seconde machine électrique (200), dans lequel la première borne de l'enroulement de commande (202) de la seconde machine électrique est connectée à la seconde borne de l'enroulement principal (101) de la première machine électrique dans la première machine électrique (100) ;
• la première borne de l'enroulement principal (101) de la première machine électrique est connectée à la première borne de l'enroulement de commande (202) de la seconde machine électrique et connectée en outre à la première borne de la source d'énergie (1000) pour l'énergie électrique d'entrée ou de sortie ;
• la seconde borne de l'enroulement de commande (102) de la première machine électrique est connectée à la seconde borne de l'enroulement de commande (202) de la seconde machine électrique et connectée en outre à la seconde borne de la source d'énergie (1000) pour l'énergie électrique d'entrée ou de sortie ;
• les enroulements desdites première machine électrique (100) et seconde machine électrique (200) sont connectés en parallèle et sont entraînés par la source d'énergie, dans lequel le fonctionnement de la première machine électrique et de la seconde machine électrique montées en parallèle avec interblocage croisé pour entraîner la charge individuellement est régi par les changements des états de charge d'entraînement de la machine électrique individuelle pour faire apparaître un fonctionnement à impédance variable afin de changer le rapport de tension de sortie entre des machines électriques individuelles en montage parallèle avec interblocage croisé, permettant de ce fait à chaque machine électrique individuelle de produire une interaction de l'effet électromagnétique requis.

2. Machines électriques asynchrones à induction et à courant alternatif montées en parallèle avec interblocage croisé selon la revendication 1, dans lesquelles les caractéristiques électriques et les caractéristiques des enroulements principaux dans les machines électriques asynchrones à induction et à courant alternatif individuelles respectives peuvent être les mêmes ou différentes.

3. Machines électriques asynchrones à induction et à courant alternatif montées en parallèle avec interblocage croisé selon la revendication 1, dans lesquelles les caractéristiques électriques et les caractéristiques des enroulements de commande dans les machines électriques asynchrones à induction et à courant alternatif individuelles respectives peuvent être les mêmes ou différentes.

4. Machines électriques asynchrones à induction et à courant alternatif montées en parallèle avec interblocage croisé selon la revendication 1, dans lesquelles les caractéristiques nominales et les caractéristiques de fonctionnement des machines électriques asynchrones à induction et à courant alternatif individuelles respectives peuvent être les mêmes ou différentes.

5. Machines électriques asynchrones à induction et à courant alternatif montées en parallèle avec interblocage croisé selon la revendication 1, dans lesquelles les différentes machines électriques peuvent être constituées par des machines électriques asynchrones à induction et à courant alternatif présentant des types de structures identiques ou différents et différentes caractéristiques de fonctionnement.

6. Machines électriques asynchrones à induction et à courant alternatif montées en parallèle avec interblocage croisé selon la revendication 1, dans lesquelles elles sont entraînées par une source d'énergie électrique à courant alternatif comprenant des sources d'énergie monophasées ou polyphasées à courant alternatif, ou des sources d'énergie à courant continu/courant alternatif, dans lesquelles la source d'énergie peut être constante ou modulée en tension, fréquence, ou fréquence et tension simultanément pour la vitesse de rotation, le couple de rotation, le sens de rotation, ou pour les opérations de freinage de régénération de puissance, ou utilisées comme dispositif de transmission de couplage sous l'effet électromagnétique asynchrone pour l'opération de transmission.

7. Machines électriques asynchrones à induction et à courant alternatif montées en parallèle avec interblocage croisé selon la revendication 1, lesquelles comprennent deux machines électriques montées en parallèle avec interblocage croisé pour constituer ce qui suit :
• l'enroulement principal (101) de la première machine électrique est l'enroulement de fonctionnement principal de la première machine électrique (100), alors que la borne (a) de l'enroulement de commande (102) de la première machine électrique est connectée en série à la borne (b) de l'enroulement de commande (202) de la seconde machine électrique (200), l'enroulement de commande (102) de la première machine électrique et l'enroulement principal (101) de la première machine électrique sont enroulés autour du même axe polaire ou enroulés selon un angle électrique entre les axes polaires dans la première machine électrique (100), dans lequel les deux machines électriques (100, 200) fonctionnent optionnellement en montage parallèle avec interblocage croisé selon les nécessités de fonctionnement du rapport de polarité qui apparaît entre le fonctionnement à excitation supplémentaire de polarités identiques, ou le fonctionnement à excitation différentiel de polarités opposées ;
• l'enroulement principal (201) de la seconde machine électrique dans la seconde machine électrique (200) est l'enroulement de fonctionnement principal de la seconde machine électrique (200), alors que la borne (a) de l'enroulement de commande (202) de la seconde machine électrique est connectée en série à la borne (b) de l'enroulement principal (101) de la première machine électrique (100), l'enroulement de commande (202) de la seconde machine électrique et l'enroulement principal (201) de la seconde machine électrique sont enroulés autour du même axe polaire ou enroulés selon un angle électrique entre les axes polaires dans la seconde machine électrique (200) dans lequel les deux machines électriques fonctionnent optionnellement en montage parallèle avec interblocage croisé selon les nécessités de fonctionnement du rapport de polarité qui apparaît entre le fonctionnement à excitation supplémentaire de polarités identiques, ou le fonctionnement à excitation différentiel de polarités opposées ;
• la borne (a) de l'enroulement principal (101) de la première machine électrique (100) et la borne (a) de l'enroulement de commande (202) de la seconde machine électrique (200) sont connectées à une borne de la source d'énergie (1000) ; la borne (b) de l'enroulement de commande (102) de la première machine électrique (100) est connecté à la borne (b) de l'enroulement de commande (202) de la seconde machine électrique à connecter en outre à l'autre borne de la source d'énergie (1000), où les deux machines électriques (100, 200) en montage en parallèle avec interblocage croisé étant montées en parallèle à la source d'énergie (1000) au cours du fonctionnement de charges entraînées individuellement présentant un fonctionnement à impédance variable suite à des fluctuations des états d'entraînement de charge individuels des machines électriques individuelles afin de laisser chaque machine électrique individuelle montées en parallèle avec interblocage mutuel relativement générer les réactions interactives requises par l'effet de la machine électrique ;
• en fonctionnement de décharge d'électricité, si le courant est modifié en raison de la variation de charge de la première machine électrique (100), alors le courant d'excitation de l'enroulement de commande (202) de la seconde machine électrique (200) connecté en série à l'enroulement principal (101) de la première machine électrique est modifié de manière simultanée, de sorte que le flux magnétique synthétique entre l'enroulement principal (201) de la seconde machine électrique et l'enroulement de commande (202) de la seconde machine électrique soit modifié en fonction du rapport de polarité, du rapport de position de l'angle électrique d'axe polaire, et du rapport de phase du courant d'excitation entre les deux, permettant ainsi au couple et à la vitesse de rotation de la seconde machine électrique (200) d'être ajustés simultanément suite aux modifications de sa propre tension minimale de fonctionnement et de sa charge ainsi qu'aux modifications du courant en fonctionnement au niveau de l'enroulement principal (101) de la première machine électrique (100) connecté en série à l'enroulement de commande (202) de la seconde machine électrique ; au contraire, si le courant est modifié en raison d'une variation de charge de la seconde machine électrique (200), alors le courant d'excitation de l'enroulement de commande (102) de la première machine électrique (100) connecté en série à l'enroulement principal (201) de la seconde machine électrique est modifié de manière simultanée, de sorte que le flux magnétique synthétique entre l'enroulement principal (101) de la première machine électrique et l'enroulement de commande (102) de la première machine électrique soit modifié en fonction du rapport de polarité, du rapport de position de l'angle électrique d'axe polaire, et du rapport de phase du courant d'excitation entre les deux, permettant ainsi au couple et à la vitesse de rotation de la première machine électrique (100) d'être ajustés simultanément suite aux modifications de sa propre charge et des modifications du courant en fonctionnement au niveau de l'enroulement principal (201) de la seconde machine électrique (200) connecté en série au premier enroulement de commande de machine électrique (102).

8. Machines électriques asynchrones à induction et à courant alternatif montées en parallèle avec interblocage croisé selon la revendication 1, lesquelles comprennent deux machines électriques asynchrones à induction et à courant alternatif triphasé connectées en étoile à entraîner par une source de courant alternatif triphasée, dans lesquelles:
• l'enroulement de commande (3102) de la première machine électrique triphasée et l'enroulement principal (3101) de la première machine électrique triphasée sont enroulés autour du même axe polaire ou enroulés selon un angle électrique entre les axes polaires dans la première machine électrique triphasée (3100), dans lesquelles les deux machines électriques (3100, 3200) fonctionnent optionnellement en montage parallèle avec interblocage croisé selon les nécessités de fonctionnement du rapport de polarité qui apparaît entre le fonctionnement à excitation supplémentaire de polarités identiques, ou le fonctionnement à excitation différentiel de polarités opposées ;
• l'enroulement de commande (3202) de la seconde machine électrique triphasée et l'enroulement principal (3201) de la seconde machine électrique triphasée sont enroulés autour du même axe polaire ou enroulés selon un angle électrique entre les axes polaires dans la seconde machine électrique triphasée (3200), dans lesquelles les deux machines électriques (3100, 3200) fonctionnent optionnellement en montage parallèle avec interblocage croisé selon les nécessités de fonctionnement du rapport de polarité qui apparaît entre le fonctionnement à excitation supplémentaire de polarités identiques, ou le fonctionnement à excitation différentiel de polarités opposées ;
• l'enroulement principal (3101) de la première machine électrique triphasée est l'enroulement de fonctionnement principal de la première machine électrique triphasée (3100), dans lequel la borne (a) de chaque enroulement de phase de l'enroulement de commande (3202) de la seconde machine électrique triphasée est connectée à la borne (b) de chaque enroulement de phase de l'enroulement principal (3201) de la seconde machine électrique triphasée dans la seconde machine électrique triphasée (3200) ;
• l'enroulement principal (3201) de la seconde machine électrique triphasée est l'enroulement de fonctionnement principal de la seconde machine électrique triphasée (3200), dans lequel la borne (a) de chaque enroulement de phase de l'enroulement de commande (3202) de la seconde machine électrique triphasée est connectée à la borne (b) de chaque enroulement de phase de l'enroulement principal (3101) de la première machine électrique triphasée dans la première machine électrique triphasée (3100) ;
• la borne (a) de chaque enroulement de phase de l'enroulement principal (3101) de la première machine électrique triphasée et la borne (a) de chaque enroulement de phase de l'enroulement principal (3201) de la seconde machine électrique triphasée sont connectés aux bornes R.S.T. de la source d'énergie triphasée ;
• la borne (b) de chaque enroulement de phase de l'enroulement de commande (3102) de la première machine électrique triphasée est à connexion commune en étoile, et la borne (b) de chaque enroulement de phase de l'enroulement de commande (3202) de la seconde machine électrique triphasée est à connexion commune en étoile, où le point de connexion commun en étoile des deux machines électriques (3100, 3200) peut être distinct, ou le point de connexion commun en étoile des deux machines électriques (3100, 3200) peut être connecté ;
• ladite première machine électrique triphasée (3100) et ladite seconde machine électrique triphasée (3200) sont connectées à la source d'énergie triphasée à courant alternatif (1000), où la première machine électrique triphasée (3100) et la seconde machine électrique triphasée (3200) dans le fonctionnement des charges entraînées individuellement le sont par l'effet du fonctionnement montées en parallèle avec interblocage croisé pour faire apparaître un fonctionnement à impédance variable en fonction des changements des états de charge d'entraînement de la machine électrique individuelle afin de changer le rapport de tension de sortie entre des machines électriques individuelles montées en parallèle avec interblocage croisé, permettant de ce fait à chaque machine électrique individuelle de produire une interaction de l'effet électromagnétique requis.

9. Machines électriques asynchrones à induction et à courant alternatif montées en parallèle avec interblocage croisé selon la revendication 1, lesquelles comprennent deux machines électriques asynchrones à induction et à courant alternatif triphasée connectées en étoile à quatre fils triphasés à entraîner par la source d'énergie à quatre fils triphasés, dans lesquelles :
• l'enroulement de commande (3102) de la première machine électrique triphasée et l'enroulement principal (3101) de la première machine électrique triphasée sont enroulés autour du même axe polaire ou enroulés selon un angle électrique entre les axes polaires dans la première machine électrique triphasée (3100), dans lequel les deux machines électriques (3100, 3200) fonctionnent optionnellement en montage parallèle avec interblocage croisé selon les nécessités de fonctionnement du rapport de polarité qui apparaît entre le fonctionnement à excitation supplémentaire de polarités identiques, ou le fonctionnement à excitation différentiel de polarités opposées ;
• l'enroulement de commande (3202) de la seconde machine électrique triphasée et l'enroulement principal (3201) de la seconde machine électrique triphasée sont enroulés autour du même axe polaire ou enroulés selon un angle électrique entre les axes polaires dans la seconde machine électrique triphasée (3200), dans lequel les deux machines électriques (3100, 3200) fonctionnent optionnellement en montage parallèle avec interblocage croisé selon les nécessités de fonctionnement du rapport de polarité qui apparaît entre le fonctionnement à excitation supplémentaire de polarités identiques, ou le fonctionnement à excitation différentiel de polarités opposées ;
• l'enroulement principal (3101) de la première machine électrique triphasée est l'enroulement de fonctionnement principal de la première machine électrique triphasée (3100), dans lequel la borne (a) de chaque enroulement de phase de l'enroulement de commande (3102) de la première machine électrique triphasée est connectée à la borne (b) de chaque enroulement de phase de l'enroulement principal (3201) de la seconde machine électrique triphasée dans la seconde machine électrique triphasée (3200) ;
• l'enroulement principal (3201) de la seconde machine électrique triphasée est l'enroulement de fonctionnement principal de la seconde machine électrique triphasée (3200), dans lequel la borne (a) de chaque enroulement de phase de l'enroulement de commande (3202) de la seconde machine électrique triphasée est connectée à la borne (b) de chaque enroulement de phase de l'enroulement principal (3101) de la première machine électrique triphasée dans la première machine électrique triphasée (3100) ;
• la borne (a) de chaque enroulement de phase de l'enroulement principal (3101) de la première machine électrique triphasée et la borne (a) de chaque enroulement de phase de l'enroulement principal (3201) de la seconde machine électrique triphasée sont connectées en commun aux bornes R.S.T. de la source d'énergie triphasée à quatre fils à courant alternatif (1000) ;
• la borne (b) de chaque enroulement de phase de l'enroulement de commande (3102) de la première machine électrique triphasée est à connexion commune et la borne (b) de chaque enroulement de phase de l'enroulement de commande (3202) de la seconde machine électrique triphasée est à connexion commune en étoile, ou le point de connexion commun en étoile des deux machines électriques est connecté à la borne neutre N de la source d'énergie triphasée à quatre fils à courant alternatif ;
• ladite première machine électrique triphasée (3100) et ladite seconde machine électrique triphasée (3200) sont entraînées par la source d'énergie triphasée à quatre fils à courant alternatif (1000), où la première machine électrique triphasée (3100) et la seconde machine électrique triphasée (3200) dans le fonctionnement des charges entraînées individuellement le sont par l'effet du fonctionnement montées en parallèle avec interblocage croisé pour faire apparaître un fonctionnement à impédance variable en fonction des changements des états de charge d'entraînement de la machine électrique individuelle afin de changer le rapport de tension de sortie entre des machines électriques individuelles montées en parallèle avec interblocage croisé, permettant de ce fait à chaque machine électrique individuelle de produire une interaction de l'effet électromagnétique requis.

10. Machines électriques asynchrones à induction et à courant alternatif montées en parallèle avec interblocage croisé selon la revendication 1, lesquelles comprennent deux machines électriques asynchrones à induction et à courant alternatif triphasé connectées en Δ à entraîner par la source triphasée de courant alternatif, dans lesquelles :
• l'enroulement de commande (3102) de la première machine électrique triphasée et l'enroulement principal (3101) de la première machine électrique triphasée sont enroulés autour du même axe polaire ou enroulés selon un angle électrique entre les axes polaires dans la première machine électrique triphasée (3100), dans lequel les deux machines électriques (3100, 3200) fonctionnent optionnellement en montage parallèle avec interblocage croisé selon les nécessités de fonctionnement du rapport de polarité qui apparaît entre le fonctionnement à excitation supplémentaire de polarités identiques, ou le fonctionnement à excitation différentiel de polarités opposées ;
• l'enroulement de commande (3202) de la seconde machine électrique triphasée et l'enroulement principal (3201) de la seconde machine électrique triphasée sont enroulés autour du même axe polaire ou enroulés selon un angle électrique entre les axes polaires dans la seconde machine électrique triphasée (3200), dans lequel les deux machines électriques (3100, 3200) fonctionnent optionnellement en montage parallèle avec interblocage croisé selon les nécessités de fonctionnement du rapport de polarité qui apparaît entre le fonctionnement à excitation supplémentaire de polarités identiques, ou le fonctionnement à excitation différentiel de polarités opposées ;
• l'enroulement principal (3101) de la première machine électrique triphasée est l'enroulement de fonctionnement principal de la première machine électrique triphasée (3100), dans lequel la première borne de l'enroulement de commande (3102) de la première machine électrique triphasée est connectée à la seconde borne de l'enroulement principal (3201) de la seconde machine électrique triphasée dans la seconde machine électrique triphasée (3200) ;
• l'enroulement principal (3201) de la seconde machine électrique triphasée est l'enroulement de fonctionnement principal de la seconde machine électrique triphasée (3200), dans lequel la borne (a) de chaque enroulement de phase de l'enroulement de commande (3202) de la seconde machine électrique triphasée est connectée à la borne (b) de chaque enroulement de phase de l'enroulement principal (3101) de la première machine électrique triphasée dans la première machine électrique triphasée (3100) ;
dans lesquelles les montages de connexion en Δ en triphasé peuvent être les suivants :
• la borne (a) de chaque enroulement de phase de l'enroulement principal (3101) de la première machine électrique triphasée et la borne (b) de chaque enroulement de phase de l'enroulement de commande (3102) de la première machine électrique triphasée sont connectées en Δ en triphasé et connectées en outre à la source d'énergie triphasée à courant alternatif (1000) ;
• la borne (a) de chaque enroulement de phase de l'enroulement principal (3201) de la seconde machine électrique triphasée et la borne (b) de chaque enroulement de phase de l'enroulement de commande (3102) de la première machine électrique triphasée sont connectées en Δ en triphasé et connectées en outre à la source d'énergie triphasée à courant alternatif (1000) ;
dans lesquelles les montages de connexion en Δ en triphasé peuvent également être les suivants :
• la borne (a) de chaque enroulement de phase de l'enroulement principal (3101) de la première machine électrique triphasée et la borne (b) de chaque enroulement de phase de l'enroulement de commande (3102) de la première machine électrique triphasée sont connectées en Δ en triphasé et connectées en outre à la source d'énergie triphasée à courant alternatif (1000) ;
• la borne (a) de chaque enroulement de phase de l'enroulement principal (3201) de la seconde machine électrique triphasée et la borne (b) de chaque enroulement de phase de l'enroulement de commande (3202) de la seconde machine électrique triphasée sont connectées en Δ en triphasé et connecteés en outre à la source d'énergie triphasée à courant alternatif (1000) ;
• ladite première machine électrique triphasée (3100) et ladite seconde machine électrique triphasée (3200) sont connectées à la source d'énergie triphasée à courant alternatif (1000), où la première machine électrique triphasée (3100) et la seconde machine électrique triphasée (3200) dans le fonctionnement des charges entraînées individuellement le sont par l'effet du fonctionnement montées en parallèle avec interblocage croisé pour faire apparaître un fonctionnement à impédance variable en fonction des changements des états de charge d'entraînement de la machine électrique individuelle afin de changer le rapport de tension de sortie entre des machines électriques individuelles montées en parallèle avec interblocage croisé, permettant de ce fait à chaque machine électrique individuelle de produire une interaction de l'effet électromagnétique requis.

11. Machines électriques asynchrones à induction et à courant alternatif montées en parallèle avec interblocage croisé selon la revendication 1, lesquelles comprennent trois machines électriques asynchrones à induction et à courant alternatif en connexion parallèle, dans lesquelles :
• le champ magnétique de la première machine électrique (100) est obtenu par l'enroulement principal (101) de la première machine électrique et par l'enroulement de commande (102) de la première machine électrique autour du même axe polaire ou selon un angle électrique entre les axes polaires, où la borne (a) de l'enroulement de commande (102) de la première machine électrique est connectée en série à la borne (b) de l'enroulement principal (301) de la troisième machine électrique à enroulement dans la troisième machine électrique (300) ; le champ magnétique de la seconde machine électrique (200) est obtenu par l'enroulement principal (201) de la seconde machine électrique et par l'enroulement de commande (202) de la seconde machine électrique autour du même axe polaire ou selon un angle électrique entre les axes polaires, où la borne (a) de l'enroulement de commande (202) de la seconde machine électrique est connectée en série à la borne (b) de l'enroulement principal (101) de la première machine électrique à enroulement dans la première machine électrique (100) ; le champ magnétique de la troisième machine électrique (300) est obtenu par l'enroulement principal (301) de la troisième machine électrique et par l'enroulement de commande (302) de la troisième machine électrique autour du même axe polaire ou selon un angle électrique entre les axes polaires, où la borne (a) de l'enroulement de commande (302) de la troisième machine électrique est connectée en série à la borne (b) de l'enroulement de commande (202) de la seconde machine électrique à enroulement dans la seconde machine électrique (200) ;
• la borne (a) de l'enroulement principal (101) de la première machine électrique (100) et la borne (a) de l'enroulement de commande (202) de la seconde machine électrique (200) sont connectées à la borne (a) de l'enroulement principal (301) de la troisième machine électrique (300) et connectées en outre à une borne de la source d'énergie (1000) ; la borne (b) de l'enroulement de commande (102) de la première machine électrique (100) et la borne (b) de l'enroulement de commande (202) de la seconde machine électrique (200) sont connectées à la borne (b) de l'enroulement de commande (302) de la troisième machine électrique (300) et connectées en outre à l'autre borne de la source d'énergie (1000), c'est par la combinaison des connexions parallèles particulières entre les enroulements principaux et les enroulements de commande des trois machines électriques susmentionnées alimentées individuellement par la source d'énergie (1000) pour entraîner des charges et en fonction des variations des différents états d'entraînement provenant de la charge des machines électriques individuelles pour permettre aux machines électriques individuelles de produire les réactions interactives requises par l'effet de la machine électrique ;
• pour les machines électriques asynchrones à induction et à courant alternatif montées en parallèle avec interblocage croisé de la présente invention, si le nombre de machines électriques constituantes est augmenté, les principes et théories susmentionnés peuvent être déduits de manière similaire.

12. Machines électriques asynchrones à induction et à courant alternatif montées en parallèle avec interblocage croisé selon la revendication 1, dans lesquelles la machine électrique asynchrone à courant alternatif définie est constituée par un champ magnétique rotatif et dans lesquelles le corps interactif actionné de manière asynchrone est induit par effet électromagnétique.

13. Machines électriques asynchrones à induction et à courant alternatif montées en parallèle avec interblocage croisé selon la revendication 1, lesquelles sont prévues pour être appliquées :
1) aux fonctionnements en moteur asynchrone de type à cage d'écureuil à induction et à courant alternatif ; ou
2) aux fonctionnements en moteur asynchrone à induction à courant de Foucault ; ou
3) aux fonctionnements en générateur asynchrone de type à cage d'écureuil à induction et à courant alternatif ; ou
4) aux fonctionnements en générateur asynchrone à induction à courant de Foucault ; ou
5) au fonctionnement en générateur partiel et au fonctionnement en moteur partiel ; ou
6) comme dispositif de freinage de machine électrique de type à cage d'écureuil à induction ; ou
7) comme dispositif de freinage de machine électrique de type comme dispositif de freinage de machine électrique de type à induction à courant de Foucault ; ou
8) comme dispositif de transmission de couplage électromagnétique asynchrone de type cage d'écureuil à induction ; ou
9) comme positif de transmission de couplage électromagnétique asynchrone de type à induction de courant de Foucault.

14. Machines électriques asynchrones à induction et à courant alternatif montées en parallèle avec interblocage croisé selon la revendication 1, dans lesquelles les rapports d'excitation entre l'enroulement principal et l'enroulement de commande dans la machine électrique elle-même comprennent :
1) les enroulements principaux et les enroulements de commande dans toutes les machines électriques elles-mêmes sont montés avec les mêmes polarités ; ou
2) les enroulements principaux et les enroulements de commande dans toutes les machines électriques elles-mêmes sont montés avec des polarités opposées ; ou
3) les enroulements principaux et les enroulements de commande dans les machines électriques partielles elles-mêmes sont montés en polarités identiques, alors que les enroulements principaux et les enroulements de commande dans les machines électriques partielles elles-mêmes sont montés avec polarités opposées.

15. Machines électriques asynchrones à induction et à courant alternatif montées en parallèle avec interblocage croisé selon la revendication 1, dans lesquelles l'enroulement principal et l'enroulement de commande dans la machine électrique individuelle sont montés en polarités identiques ou montés selon un angle électrique différent, où le procédé de montage selon un angle électrique différent est réalisé par le courant passant à travers l'enroulement de commande pour changer la forme de distribution changement du champ magnétique constitué ainsi que le champ magnétique principal.

16. Machines électriques asynchrones à induction et à courant alternatif montées en parallèle avec interblocage croisé selon la revendication 1, dans lesquelles les différentes machines électriques sont mutuellement connectées en série et sont directement entraînées par la source d'énergie électrique à courant alternatif, y compris une source d'énergie monophasée ou polyphasée à courant alternatif, ou une source d'énergie à courant continu/courant alternatif, dans lesquelles la source d'énergie peut être constante ou modulée en tension, ou est modulée de manière commune en fréquence ou en tension, ou modulée simultanément en fréquence et en tension pour la vitesse de rotation, le couple de rotation, le sens de rotation, ou pour les opérations de freinage de régénération de puissance, ou utilisé comme dispositif de transmission de couplage sous l'effet électromagnétique asynchrone pour l'opération de transmission.
